# EUROPEAN PATENT APPLICATION

(11) **EP 3 388 998 A1**
(43) Date of publication of application: **17.10.2018**
(21) Application number: 16872703.0
(22) Date of filing: 12.10.2016
(51) Int. Cl.: G06Q 30/02, G06Q 50/10

(54) **INFORMATION DISTRIBUTION DEVICE, INFORMATION DISTRIBUTION METHOD, INFORMATION DISPLAY DEVICE, AND INFORMATION DISPLAY METHOD**

(30) Priority: 08.12.2015 JP 2015239719
(71) Applicant: Sony Corporation, Tokyo 108-0075 (JP)
(72) Inventor: KANEMOTO, Katsuyoshi, Tokyo 108-0075 (JP); IDE, Naoki, Tokyo 108-0075 (JP); OGAWA, Nobuhiro, Tokyo 108-0075 (JP); OGATA, Takashi, Tokyo 108-0075 (JP); TANAKA, Sho, Tokyo 108-0075 (JP); KAWAMOTO, Kenta, Tokyo 108-0075 (JP)
(74) Representative: Witte, Weller & Partner Patentanwälte mbB
(86) International application number: PCT/JP2016/080269
(87) International publication number: WO 2017/098803

(57) **Abstract**

Provided is an information distribution apparatus which effectively distributes information such as advertisements.

An advertisement distribution system predicts seat conditions such as a change in seat occupancy rate with time and distributes advertising information to prospective customers who can visit around the time when the seats are available. By offering more advantageous discount rates, coupons and the like to prospective customers with a short traveling time to a store in a case where seats are already available, it is possible to quickly occupy the seats and recover the seat occupancy rate in a short period of time. On the other hand, a disadvantageous offer is made to prospective customers who arrive after the time when empty seats are predicted since they do not contribute much to the recovery of the seat occupancy rate.

## Description

### TECHNICAL FIELD

The technologies disclosed in this specification relate to an information distribution apparatus and an information distribution method for distributing information such as advertisement of a store, and to an information display apparatus and an information display method.

### BACKGROUND ART

To increase the number of users of goods and services, publicity activities such as advertisement have been widely conducted. Advertisement using newspaper leaflets and magazines and advertisement/publicity activities such as commercial messages (CM) in television, radio broadcasts and the like have been conducted from a long time ago. Recently, advertisement/publicity activities using information communication technologies, such as banners, digital signage and distribution of advertising mails to mobile terminals of users, are increasingly adopted. By using the information communication technologies, it is believed to be possible to realize advertisement/publicity activities with high immediacy and fine granularity (i.e., capable of controlling distribution destinations) as compared with a case of using paper media such as newspapers and magazines, and a broadcast media such as televisions and radios.

For example, proposals have been made for restaurant reservation systems that propose possible combinations, discount rate and the like for restaurant reservation under the rules to maximize revenue, maximize client satisfaction, maximize table occupancy rate, and the like (see Patent Document 1, for example).

### CITATION LIST

### Patent Document

Patent Document 1: Japanese Patent Application Laid-Open No. 2013-20626

### SUMMARY OF THE INVENTION

### PROBLEMS TO BE SOLVED BY THE INVENTION

An object of the technologies disclosed in this specification is to provide an excellent information distribution apparatus and information distribution method, which are capable of effectively distributing information such as advertisements, and an information display apparatus and an information display method.

### SOLUTIONS TO PROBLEMS

The technologies disclosed in this specification have been made in light of the above problem, and a first aspect thereof is an information distribution apparatus including:
a selection unit which selects a distribution target of advertising information regarding a predetermined business operator on the basis of a traveling time or a traveling cost to the business operator; and
a distribution unit which distributes the advertising information to the distribution target selected.

According to a second aspect of the technologies disclosed in this specification, the selection unit of the information distribution apparatus according to the first aspect is configured to select the distribution target on the basis of the traveling time or the traveling cost predicted to be required when the distribution target travels to the business operator.

According to a third aspect of the technologies disclosed in this specification, the distribution target is a vehicle or a mobile communication terminal. Then, the selection unit of the information distribution apparatus according to the first aspect is configured to select the distribution target on the basis of positional information of the vehicle or the mobile communication terminal.

According to a fourth aspect of the technologies disclosed in this specification, the distribution target is a vehicle or a mobile communication terminal. Then, the selection unit of the information distribution apparatus according to the first aspect is configured to select the distribution target on the basis of a traffic situation of a road.

According to a fifth aspect of the technologies disclosed in this specification, the business operator is a seat provider who provides a predetermined service to a client having visited a seat. Then, the selection unit of the information distribution apparatus according to the first aspect is configured to select the distribution target on the basis of a traveling time or a traveling cost to the seat.

According to a sixth aspect of the technologies disclosed in this specification, the selection unit of the information distribution apparatus according to the fifth aspect is configured to select the distribution target on the basis of a travelable range by a predicted time when guidance of the client becomes unnecessary for the business operator.

According to a seventh aspect of the technologies disclosed in this specification, the selection unit of the information distribution apparatus according to the first aspect is configured to select the distribution target on the basis of a budget of the business operator.

According to an eighth aspect of the technologies disclosed in this specification, the selection unit of the information distribution apparatus according to the fifth aspect is configured to select the distribution target on the basis of a budget which transitions according to a time to a predicted time in a travelable range by the predicted time when an empty seat is occupied at the seat provider.

According to a ninth aspect of the technologies disclosed in this specification, the distribution unit of the information distribution apparatus according to the first aspect is configured to distribute the advertising information including a message to a client from the business operator and change the advertising information according to the traveling time.

According to a tenth aspect of the technologies disclosed in this specification, the distribution unit of the information distribution apparatus according to the first aspect is configured to distribute the advertising information according to the traveling cost or the mobile body.

According to an eleventh aspect of the technologies disclosed in this specification, the distribution unit of the information distribution apparatus according to the first aspect is configured to distribute at least one of advertising information for a mobile communication terminal possessed by a prospective customer of the business operator, advertising information to be displayed on an outside of a housing of a mobile body, and advertising information displayed so as to be viewable by a passenger of the mobile body.

According to a twelfth aspect of the technologies disclosed in this specification, the distribution unit of the information distribution apparatus according to the first aspect is configured to stop distributing the advertising information in response to receiving a notification that a customer has been sent to the business operator.

According to a thirteenth aspect of the technologies disclosed in this specification, the information distribution apparatus according to the first aspect further includes a recording unit which records a history of sending a prospective customer to the business operator.

Moreover, a fourteenth aspect of the technologies disclosed in this specification is an information distribution method including:
a selection step of selecting a distribution target of advertising information regarding a predetermined business operator on the basis of a traveling time and a traveling cost to the business operator; and
a distribution step of distributing the advertising information to the distribution target selected.

Furthermore, a fifteenth aspect of the technologies disclosed in this specification is an information display apparatus including:
a receiving unit which receives the advertising information distributed from the information distribution apparatus according to the first aspect of the technologies disclosed in this specification;
a filter processing unit which filters the advertising information received, on the basis of a condition set by an operating company of a mobile body, which sends a prospective customer to the business operator, or by a manipulator of the mobile body; and
a display unit which displays, on an outside of a housing of the mobile body, the advertising information filtered.

Further, a sixteenth aspect of the technologies disclosed in this specification is an information display apparatus including:
a receiving unit which receives the advertising information distributed from the information distribution apparatus according to the first aspect of the technologies disclosed in this specification;
a recognition unit which recognizes a passenger of a mobile body;
a filter processing unit which filters the advertising information received, on the basis of a condition set according to a recognition result by the recognition unit; and
a display unit which displays, at a place where the passenger can see in a housing of the mobile body, the advertising information filtered.

In addition, a seventeenth aspect of the technologies disclosed in this specification is an information display apparatus including:
a receiving unit which receives the advertising information distributed from the information distribution apparatus according to the first aspect of the technologies disclosed in this specification;
an input unit with which a user performs an input;
a filter processing unit which filters the advertising information received, on the basis of a condition designated via the input unit; and
a display unit which displays the advertising information filtered.

According to an eighteenth aspect of the technologies disclosed in this specification, the display unit of the information display apparatus according to any one of the fifteenth to seventeenth aspects is configured to display the advertising information including a message to a client from the business operator. Then, the information display apparatus further includes a customer sending processing unit which sends a prospective customer, who has received the message, to the seat.

According to a nineteenth aspect of the technologies disclosed in this specification, the information display apparatus according to the eighteenth aspect further includes a recording unit which records a history of sending the prospective customer, who has received the message, to the seat.

Still further, a twentieth aspect of the technologies disclosed in this specification is an information display method including:
a receiving step of receiving the advertising information distributed from the information distribution apparatus according to the first aspect of the technologies disclosed in this specification;
a filter processing step of filtering the advertising information received, on the basis of a condition set by an operating company of a mobile body, which sends a prospective customer to a business operator, or by a manipulator of the mobile body; and
a display step of displaying, on an outside of a housing of the mobile body, the advertising information filtered.

### EFFECTS OF THE INVENTION

According to the technologies disclosed in this specification, it is possible to provide an excellent information distribution apparatus and information distribution method, which are capable of effectively distributing advertising information for occupying an empty seat at a store, and an information display apparatus and an information display method.

Note that the effects described in this specification are merely examples, and the effects of the present invention are not limited thereto. Moreover, in addition to the above effects, the present invention may further exert additional effects.

Still other objects, features and advantages of the technologies disclosed in this specification will become apparent from a more detailed description based on the embodiments described later and the accompanying drawings.

### BRIEF DESCRIPTION OF THE DRAWINGS

Fig. 1 is a diagram schematically showing a configuration example of an information communication system 10 which develops an advertisement distribution service.
Fig. 2 is a diagram exemplifying a temporal transition of a budget that can be used for an offer.
Fig. 3 is a diagram exemplifying a relationship between a traveling cost and the number of visitors in a case where the traveling cost of a customer is covered within a budget range.
Fig. 4 is a diagram showing a presentation example of a vehicle exterior advertisement.
Fig. 5 is a diagram showing a presentation example of a vehicle exterior advertisement.
Fig. 6 is a diagram showing a presentation example of a vehicle exterior advertisement.
Fig. 7 is a diagram showing a presentation example of a vehicle exterior advertisement.
Fig. 8 is a diagram showing a presentation example of a vehicle exterior advertisement.
Fig. 9 is a diagram showing a presentation example of a vehicle interior advertisement.
Fig. 10 is a diagram showing a presentation example of a vehicle interior advertisement.
Fig. 11 is a diagram showing a presentation example of a vehicle interior advertisement.
Fig. 12 is a diagram showing a presentation example of a vehicle interior advertisement.
Fig. 13 is a diagram exemplifying a screen of an information terminal displaying an offer acceptance button.
Fig. 14 is a diagram showing a presentation example of an advertisement for information terminals.
Fig. 15 is a diagram showing a presentation example of an advertisement for information terminals.
Fig. 16 is a diagram showing a presentation example of an advertisement for information terminals.
Fig. 17 is a diagram showing a presentation example of an advertisement for information terminals.
Fig. 18 is a flowchart showing a procedure of store statistical processing carried out at a store 12.
Fig. 19 is a flowchart showing a procedure of advertising information distribution preparation processing carried out at the store 12.
Fig. 20 is a flowchart showing a processing procedure for displaying advertising information at a distribution destination terminal.
Fig. 21 is a flowchart showing a processing procedure when a prospective customer has accepted an offer at a distribution destination of the advertising information.
Fig. 22 is a flowchart showing a processing procedure of updating distribution destinations of the advertising information by an advertisement distribution system 11.
Fig. 23 is a flowchart showing a processing procedure for billing for remuneration according to the achievement of sending a prospective customer.
Fig. 24 is a diagram schematically showing exchanges in the information communication system 10 to occupy an empty seat at the store 12.
Fig. 25 is a diagram showing the entire processing flow in the information communication system 10 to occupy an empty seat at the store 12.
Fig. 26 is a diagram showing a configuration example of a GUI used to set conditions for a secondary filter on advertising information for vehicle exterior advertisement.
Fig. 27 is a diagram showing a configuration example of a GUI used to set conditions for a secondary filter on advertisement for information terminals.

### MODE FOR CARRYING OUT THE INVENTION

Hereinafter, the embodiments of the technologies disclosed in this specification will be described in detail with reference to the drawings.

### A. System Configuration

By using information communication technologies, it is possible to conduct advertisement/publicity activities such as banners, digital signage and distribution of advertising mails to mobile terminals of users. By including information such as discounts and coupons in advertisements, a rate of attracting customers will increase. For example, by offering discounts, coupons and the like on the basis of the predicted seat availability at stores such as restaurants, it is expected to eliminate time slots when the seat occupancy rate decreases and level the sales of the stores.

However, it is hard to say that offering the same discount rate or coupon regardless of the location of a prospective customer, who is likely to visit the store, is effective advertisement/publicity activities. Customers who cannot visit at a time when empty seats are predicted but arrive at a time when the store starts to be crowded again do not contribute to improvement of the seat occupancy rate. In addition, a traveling cost, a traveling time, and labor for traveling should be in consideration for customers who are far from the store to visit. In addition, even if coupons valid for only time slots when empty seats are predicted are distributed, the customers who are far from the store may be not able to visit at that time.

Thereupon, an advertisement distribution system, which can effectively distribute advertising information in consideration of a traveling cost and a traveling time of a prospective customer for visit, is proposed below in this specification.

The advertisement distribution system, to which the technologies disclosed in this specification are applied, distributes advertising information to prospective customers who can visit the store (travel to seats) around a time when seats are available in response to a seat condition that the seat occupancy rate is predicted to change with time. The advertising information distributed to the prospective customers includes information regarding offers such as discounts and coupons for goods and coverage of a traveling cost. By offering more advantageous discount rates, coupons and the like to prospective customers with a short traveling time to the store when seats are already available, it is possible to quickly occupy the seats and recover the seat occupancy rate in a short period of time. On the other hand, more disadvantageous offers are made (offers with advantageous discount rates or coupons are not made) to prospective customers who arrive after the time when empty seats are predicted since they do not contribute much to the recovery of the seat occupancy rate (resolution of empty seats).

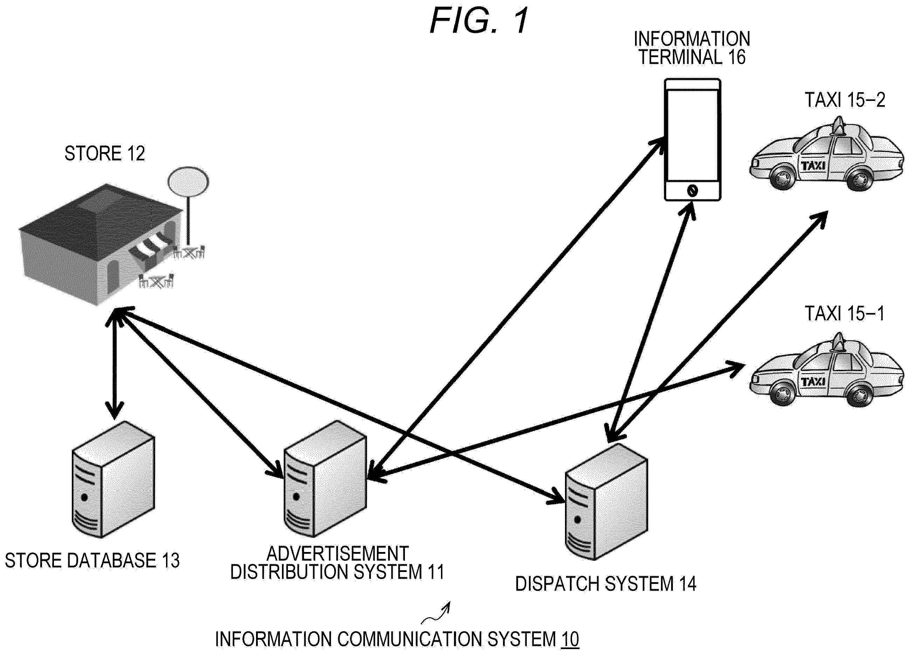

Fig. 1 schematically shows a configuration example of an information communication system 10 in which an advertisement distribution system 11, to which the technologies disclosed in this specification are applied, develops an advertisement distribution service. In addition to the advertisement distribution system 11, the information communication system 10 shown in the drawing is configured with a store 12, a store database (DB) 13, a large number of taxis 15 as traveling means for customers (prospective customers), a dispatch system 14 which controls arrangements of the taxis 15 or the like, and information terminals 16 such as smartphones and tablets possessed by a myriad of customers (prospective customers).

The store 12 may belong to various business categories, such as a restaurant, a concert hall, a theater, a movie theater, an airplane, a bullet train, a hotel and other accommodation facilities, and basically belongs a business category in which seats are provided. The empty seat trend of seats (occupancy rate) provided by the store 12 varies depending on the business categories. Various store information such as purchase, sales and the empty seat trend of the seats at the store 12 is statistically processed by the store 12 and stored in the store database 13.

The advertisement distribution system 11 distributes advertising information regarding the store 12 to the information terminals 16 possessed by the prospective customers and the advertising information to in-vehicle terminals of the taxis 15 as the traveling means for delivering the prospective customers to the store 12, and performs the advertisement/publicity activities for the store 12 by using these distribution destination terminals. Although only one store 12 and one advertisement distribution system 11 are drawn in Fig. 1, it is supposed in the real world that one advertisement distribution system 11 undertakes advertisement/publicity activities for a plurality of stores 12, or a plurality of advertisement distribution systems 11 are installed by a plurality of operators (e.g., advertising agencies). Alternatively, it is also supposed a case where each store 12 runs the advertisement distribution system 11.

The advertising information distributed by the advertisement distribution system 11 includes offer information such as discounts and coupons together with contents (advertising creatives) such as images and texts introducing the store 12.

Main features of the advertisement distribution system 11 to which the technologies disclosed in this specification are applied are to control the distribution of the advertisements and offers such as discounts and coupons according to a traveling time of prospective customers to the store 12 (seat) under a seat condition that the seat occupancy rate is predicted to change with time and to control the offer condition in further consideration of a traveling cost of the prospective customers to the store 12 (seat). Examples of controlling the offers are listed below.

### 1. Controlling Advertisement Distribution and Offers according to Traveling Time

(1-1) More advantageous discount rates, coupons and the like are offered to prospective customers with a short traveling time to the store 12 (empty seats) when seats are already available to quickly occupy the seats.
(1-2) More disadvantageous offers are made to prospective customers who arrive after the time when empty seats are predicted (e.g., the predicted time when empty seats are normally occupied (i.e., guidance of clients becomes unnecessary)).

### 2. Controlling Offer Condition according to Traveling Cost

(2-1) In a case where a traveling means, such as a car, with which a traveling cost does not change significantly depending on the number of passengers, is used, more advantageous offers are made to more prospective customers with the number which does not exceed the number of empty seats.
(2-2) A coupon which can be used for a traveling means such as a public transportation or a taxi is transmitted to the information terminals 16 possessed by the prospective customers.
(2-3) The store 12 which provides a seat arranges a traveling means and picks up the customer.

The dispatch system 14 controls dispatch of the taxis 15, which are traveling means to the store 12. The dispatch system 14 is run by, for example, a taxi operator, but it is also supposed a case where the same business operator runs both the advertisement distribution system 11 and the dispatch system 14 and the advertisement distribution system 11 and the dispatch system 14 are configured as a physically integrated apparatus.

The exchanges among each entity configuring the information communication system 10 will be briefly described.

The store 12 statistically processes various store information such as purchase, sales and the empty seat trend of the seats and stores the information in the store database 13.

Moreover, the store 12 predicts the time when a seat is available on the basis of the present visit situation and the past statistics stored in the store database 13. Furthermore, the store 12 transmits the offer condition to the advertisement distribution system 11 after defining functions (described later) of a budget, which represent the temporal transition of the budget that can be used for the offer to the prospective customers.

On the basis of the functions of the budget received from the store 12, the advertisement distribution system 11 identifies an area where the budget that can be used for the offer becomes positive in consideration of the traveling time to the store 12 (primary filter: described later). Then, the advertising information including offers such as discounts and coupons is distributed to the information terminals 16 possessed by prospective customers being present in that area.

Meanwhile, the information terminal 16 performs filtering under preset filter conditions (secondary filter: described later) and displays the advertising information.

After accepted the offer displayed on the information terminal 16, the prospective customer dispatches the taxi 15 to be a traveling means to the store 12 according to the offer condition. As for the dispatch, the information terminal 16 may directly call in the taxi 15, or the taxi 15 may be arranged via the dispatch system 14. In addition, distribution stop processing is performed in the advertisement distribution system 11 for the advertising information so that the same offer is not accepted by other person.

When a predetermined time without customers (e.g., a predicted time when empty seats are normally occupied) passes, the seats at the store 12 are occupied, or the store 12 is closed, the advertisement distribution system 11 changes the distribution destinations of the advertising information or stops the distribution.

The advertisement distribution system 11 bills the store 12 for the cost of the advertisement/publicity of the store 12 on the basis of the transmission history of the advertising information to the prospective customers and the history of sending the customers to the store 12.

Moreover, the dispatch system 14 bills the store 12 for the traveling costs on the basis of the history of sending the customers to the store 12.

### B. About Seats

In this section, a method of predicting the empty seat trend at the store 12, which is a seat provider, will be described.

The empty seat trend of the seats varies depending on the business category of the store 12. The empty seat trend for each business category is exemplified below. Regardless of the business category of the store 12, a final matter is whether "how many" customers visit by "when (time)" to increase the seat occupancy rate, and it is necessary to calculate (predict) information regarding the temporal transition of the seat occupancy rate. Note that it may be necessary to calculate "how many" customers separately for the numbers of adults and children depending on cases.

### (1) Restaurant

In a business category such as a restaurant, it is possible to create a stay time distribution of customers from past cases for each combination of time slots, such as lunch, dinner, weekday and holiday, and days of the week. From the stay time distribution of the past customers and a present stay time of customers in the store, it is possible to know the next empty table and a table that is already available. With these pieces of information, it is possible to predict when each table (= how many seats) will be available.

### (2) Concert, Play, Movie, Airplane and Bullet Train

It is presumed that the seats of these business categories are basically designated seats. Therefore, from the empty seat for the screening that is not opened yet (or from the empty seat in an airplane or a vehicle not departing yet), it is possible to know how many seats are available by when. Note that, unlike restaurants that can accept customers unless their closing times have passed, the customers cannot enter and the offer itself becomes impossible if a certain time such as the start time, the opening time or the departure time has passed.

### (3) Hotel and Inn

In this business category, customers basically reserve to use, and a use start deadline is fixed (e.g., it is necessary to check in by a predetermined time). Therefore, like a concert and the like, it is possible to know the availability from the empty room (= how many people) by the check-in deadline.

### C. Information Transmitted from Seat Provider

The advertisement distribution system 11 controls an offer to prospective customers for accepting the seats at the store according to the traveling time, the traveling cost, and the like (previously mentioned). In this section, in order to realize such a service in the advertisement distribution system 11, information transmitted to the advertisement distribution system 11 from the store 12, which is the seat provider, will be described.

The main information transmitted from the store 12, which is the seat provider, is the following four types of information, "providable services," "advertising creatives," "offer conditions," and "distribution targets." However, the store 12 may also transmit other information to the advertisement distribution system 11, and the advertisement distribution system 11 may control the offers to the prospective customers in consideration of other information. In addition, all of these four types of information are not indispensable, and the advertisement distribution system 11 realizes the offer control on the basis of other information when any one pieces of the information is not sent from the store 12.

### (1) Providable Services

The providable services include services that can be provided by the store 12 for the customers and information such as the cost of each service, and the like. For example, if the business category of the store 12 is a restaurant, the providable services include a menu and the prices thereof at the store. If the business category is a concert, the providable services include information regarding a program, performers and ticket fees and the like.

### (2) Advertising Creatives

Advertisings creatives are contents such as an image that can be used for advertising information distributed to prospective customers by the advertisement distribution system 11, and are, for example, an image of a representative menu or an image obtained by cutting out a scene of the services provided by the store 12, or the like. Moreover, if the store 12 transmits advertising creatives which are the collection of pictures of all menus, the advertisement distribution system 11 can distribute advertising information including images suited to personal preferences to each prospective customer. Furthermore, since the details of the offer that the store 12 can offer to customers (discount conditions and coverage of traveling cost to the store 12) dynamically change, it is necessary to cast in these details later (i.e., every time the details change).

### (3) Offer Conditions

The budget that the store 12 can use for the offers to prospective customers transitions with time. The advertisement distribution system 11 can offer the prospective customers with possible combinations within the budget range (e.g., a combination of discounts or coupons and coverage of traveling cost). Therefore, the store 12 transmits information regarding the budget and possible combinations of the offers to the advertisement distribution system 11. For example, it is possible to discount the goods by using all the budget or to cover the traveling cost of the customer to the store 12 within the budget range.

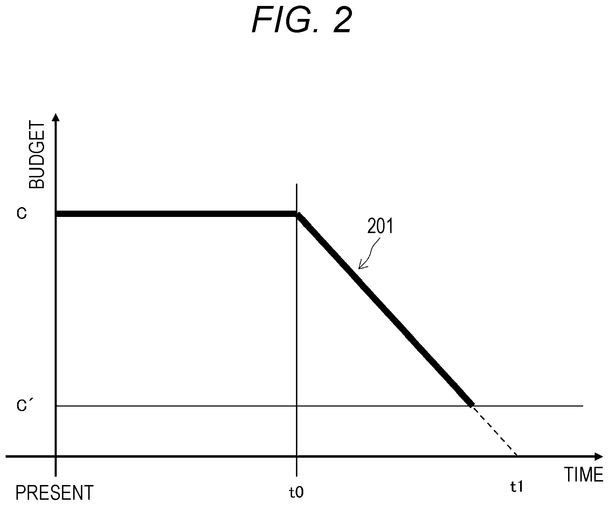

Fig. 2 shows a temporal transition 201 of the budget that can be used for the offer (however, this is in a case where the goods are discounted by using all the budget). In the drawing, the horizontal axis represents the time axis, and the vertical axis represents the budget amount. The budget that can be used for the offer is a function of time in short, and the store 12 transmits budget information including the function of time as shown in Fig. 2 to the advertisement distribution system 11.

An example of the transition of the budget shown in Fig. 2 will be described. A time t0 is a predicted time when a certain seat in the store 12 becomes available. In addition, a time t1 is a predicted time when empty seats are normally (or naturally) occupied without performing any promotions (advertisement/publicity activities, and the like). For example, the time t0 is the time when the lunch time ends, and the time t1 is the time when the dinner time starts (the seat becomes available after the end time t0 of the lunch time, but empty seats are normally occupied after the start time t1 of the dinner time). That is, a time between t1 and t0 is a time interval when customers who occupy the seats normally visit without any promotions.

C is the upper limit of the budget that can be used for the offer. In the example shown in Fig. 2, an amount obtained by multiplying the expected profit which the store 12 could have earned at the time between t1 and t0 by a ratio smaller than 1 is set to C (if multiplied by 1, the profit is the same even without the offer). In addition, C' is the lower limit of the budget to be used for the offer. There is a possibility that customers will not visit even if the time t1 when customers normally visit has passed, and a cost which may be paid to continue to make offers in this case (after sales are interrupted) is set to C'. Note that the profit of the store 12 is reduced by the number of visitors / the number of seats. Therefore, a budget that can be actually used is obtained by subtracting the number of visitors divided by the number of seats from the heavy line indicated by the reference numeral 201 in Fig. 2.

Note that the temporal transition of the budget that can be used for the offer shown in Fig. 2 is one example, and distribution services of the advertising information can be developed with other transitions in consideration of traveling cost and traveling time of prospective customers to the store. In addition, Fig. 2 is an example presuming a business category such as a restaurant. In a business category such as concert or a conveyance in which customers cannot enter after a certain time has passed, the upper limit C of the budget that can be used for the offer will transition to 0 after that certain time.

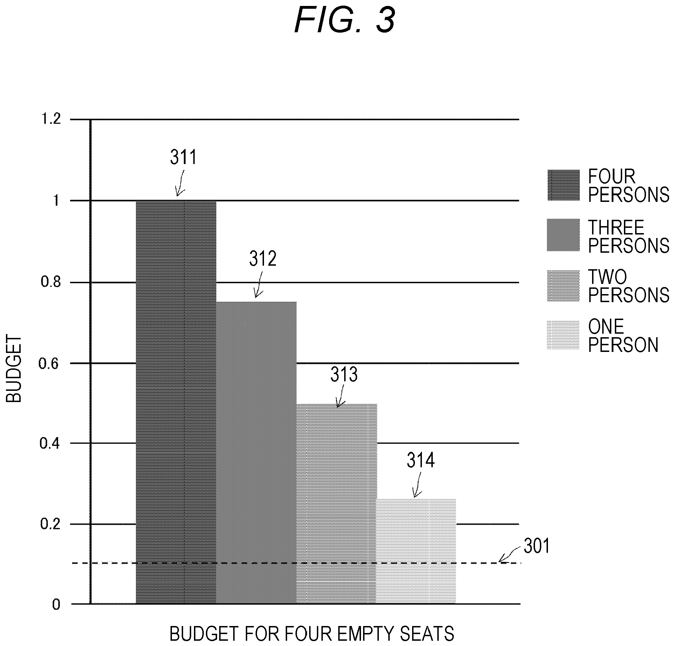

Moreover, Fig. 3 exemplifies a relationship between the traveling cost and the number of visitors in a case where the store 12 covers the traveling cost of the customer within the budget range. The store 12 transmits the budget information, which indicates the coverage of the traveling costs corresponding to the number of visitors as shown in Fig. 3, to the advertisement distribution system 11.

Fig. 3 shows the budget that the store 12 can cover the traveling costs according to the number of visitors, presuming that there are four empty seats in the store 12 and a customer visits by using a taxi with four passenger capacity. If the number of visitors is within the passenger capacity, the traveling cost is constant regardless of the number of persons. In a case where 10% of the budget that can be used for the offer by the store 12 is allocated to cover the traveling costs, the portion above the dotted line indicated by the reference numeral 301 in Fig. 3 is the remaining budget that can be used for the offer. The reference numerals 311 to 314 indicate the budgets for the offer according to the number of persons traveling with the same taxi respectively. As long as the number of visitors is within the passenger capacity of the taxi, the traveling cost is constant regardless of the number of persons. Thus, it is possible to provide a more advantageous offer as the number of visitors increases up to four people.

### (4) Distribution Target

The purpose of distributing the advertising information to the prospective customers by the advertisement distribution system 11 is to improve the seat occupancy rate in the store 12. It is effective to distribute the advertising information to the prospective customers who can visit the store 12 between a predicted time t0 when a certain seat in the store 12 becomes available and a predicted time t1 when empty seats are normally occupied without performing any promotions. In other words, there is no point in distributing the advertising information to a person who can visit only after the predicted time t1. Thereupon, an area in which persons can visit by the expected time t1 is set to be a distribution target, the store 12 transmits information regarding the distribution target to the advertisement distribution system 11, and the advertisement distribution system 11 distributes the advertising information to the information terminals 16 possessed by the prospective customers and the taxis 15 in the area, which is the distribution target.

### D. Primary Filter for Advertisement Distribution

As described above, there are two main conditions for selecting a prospective customer to whom the offers are presented, the budget of the store 12 and the time when the prospective customer arrives the empty seat in the store 12. For the distribution destination of the advertising information, the advertisement distribution system 11 sets two conditions, the budget and the empty seat arrival time, as the primary filter that narrows down the distribution target of the advertising information.

For example, in a case where the distribution destination of the advertising information is a traveling means such as a taxi (a transporting means of a prospective customer), the conditions for the primary filter are that the cost of riding a prospective customer at the present position and sending the customer to a target store 12 is lower than the budget (e.g., 10% of the total budget that can be used for the offer) and that the customer can be sent by the empty seat arrival time (t1) in consideration of the state of the traveling route such as traffic situation (congestion information) of the road.

In addition, in a case where the information terminal 16 such as a smartphone or a tablet possessed by a prospective customer is the distribution destination of the advertising information, the conditions for the primary filter are that the cost of dispatching a taxi to a present location and sending the customer to the store 12 is lower than the budget (e.g., 10% of the total budget that can be used for the offer) and that the customer can be sent by the empty seat arrival time (t1) in consideration of the state of the traveling route such as traffic situation of the road.

In the primary filter, information necessary for determining whether a customer is the distribution destination are offer conditions (budget and empty seat arrival time) and a traveling cost and a traveling time to the store 12 (empty seat). For example, in a case where a taxi is used as a traveling/transporting means of a customer, the cost of dispatching /sending the customer must be calculated as the traveling cost, and information, such as the present position, the destination (the location of the store 12), the estimated time for dispatching/sending the customer, a calculation table of fare determined by a taxi company, and the like, is necessary. In addition, the estimated time for dispatching/sending the customer must be calculated as the traveling time, and information, such as the present position (or the position of the customer in a case of dispatch), the destination (the location of the store 12), the road traffic situation, and the like, is necessary.

The advertisement distribution system 11 can process the primary filter by receiving the above necessary information from the store 12, which is the seat provider, or the like and effectively distribute the advertising information by determining an appropriate distribution destination. It is needless to say that it is also possible that the advertisement distribution system 11 does not process the primary filter and distributes the advertising information to all distribution destination terminals, such as the information terminals 16 possessed by the prospective customers and the in-vehicle terminals of the taxis 16, and the secondary filter (described later) is processed at the distribution destination terminals. However, if the advertising information is distributed to all the distribution destination terminals, the loads of the secondary filtering processing at the distribution destination terminals increase. Thus, the applicant believes that it is reasonable to process the primary filter in the advertisement distribution system 11.

### E. Secondary Filter for Advertisement Distribution

The primary filter is a processing to be carried out for the convenience of the store 12, which is the seat provider, on the basis of the budget that can be used for the offer and the empty seat arrival time. On the other hand, at the distribution destination terminal of the advertising information, it is possible to preset the conditions for the secondary filter on the basis of individual information such as a circumstance and situation of the distribution destination and display the received advertising information that has been sorted out. In addition, the secondary filter also plays a role of determining which advertising information to be prioritized when a plurality of pieces of advertising information arrive at one distribution destination terminal.

The distribution destination terminal of the advertising information from the advertisement distribution system 11 is the information terminal 16 possessed by a prospective customer, an in-vehicle terminal of the taxi 15 which sends the prospective customer, or the like. Since only the owner uses the information terminal 16, it is possible to easily specify the viewer of the advertising information displayed on the information terminal 16. On the other hand, a passenger of the taxi 15 is unspecified, and it is difficult to specify the viewer of the advertising information displayed in the taxi 15. Therefore, the conditions for the secondary filter should be set depending on whether the viewer can be specified. Moreover, display formats of the advertising information at the taxi 15 include a vehicle exterior advertisement displayed outside the vehicle, such as a side or a rear portion of the vehicle body, and a vehicle interior advertisement displayed in a room (e.g., a display installed on the back of the driver's seat). There is a difference between the former and the latter that a prospective customer views the advertising information before riding in the former and a prospective customer views the advertising information after riding in the latter. This affects the setting of the conditions for the secondary filter. The setting of conditions for the secondary filter for each type of distribution destination terminals will be described below.

### (1) Setting of Conditions for Secondary Filter for Taxi (Vehicle Exterior Advertisement Distribution)

In a case where vehicle exterior advertisement is performed by using the side, the rear portion or the like of the vehicle body, a person who has not ridden yet is the viewer of the advertisement so that it is impossible to know the preference thereof in advance. Therefore, the driver or the operating company of the taxi 15 takes the lead in setting the conditions for the secondary filter for the advertising information for the vehicle exterior advertisement, and, for example, the processing of the secondary filter is carried out in the dispatch system 14.

For example, the conditions are set to prioritize an advertisement desired to be more viewed (matching the concept of the taxi 15) and remove advertisements which do not match the concept, or the conditions are set to remove advertising information desired to be avoided by the operating company of the taxi and advertising information of the rival business companies (or conversely, to prioritize advertising information of a company having the same business interest). Moreover, by setting the conditions to select an advertisement with a higher number or ratio empirically connected with conversions in that area (leading to send a customer), it is expected that the store 12 as well as the taxi company can earn revenues. Furthermore, the setting of the conditions for the secondary filter may be changed according to time slots.

It is also possible to designate the shortest/longest distance of sending the customer with the secondary filter for the advertising information for the vehicle exterior advertisement. In the primary filter, the longest distance of sending the customer may be set from the viewpoint of the empty seat arrival time. On the other hand, there may be a case where a short distance of sending the customer is not profitable for the operating company of the taxi 15. Thus, the shortest distance of sending the customer may be set as the condition for the secondary filter so that at least the minimum profit is promised.

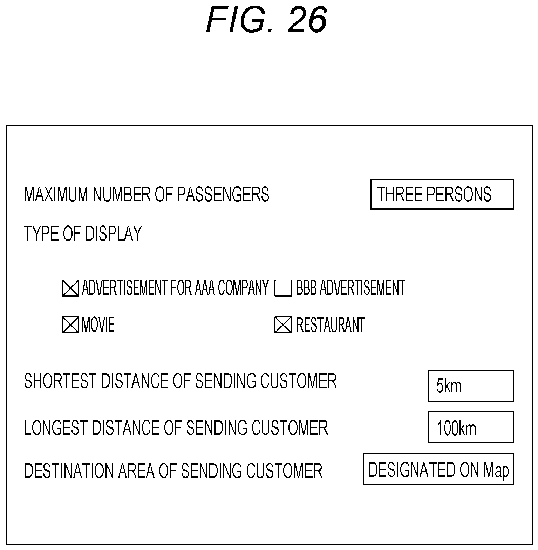

Fig. 26 shows a configuration example of a graphical user interface (GUI) used to set the conditions for the secondary filter for the advertising information for the vehicle exterior advertisement. For example, on the in-vehicle terminal, the driver of the taxi can designate the maximum number of passengers in the taxi, the type of advertisement to be displayed, the shortest distance and the longest distance of sending the customer, and a method of designating a destination area of sending the customer via the GUI shown in the drawing.

Only the advertising information suitable for the secondary filter among the advertising information received from the advertisement distribution system 11 is displayed on a display installed outside the vehicle, such as the side or the rear portion of the vehicle body of the taxi 15.

### (2) Setting of Conditions for Secondary Filter for Taxi (Vehicle Interior Advertisement Distribution)

An unspecified prospective customer is the viewer of the vehicle interior advertising information of the taxi. However, after the customer rides on, for example, by performing face recognition using a captured image of an in-vehicle camera, demographic information such as the number of passengers and sex, age and the like of each passenger can be inferred. Therefore, by setting the conditions for the secondary filter for the vehicle interior advertising information so that the distribution destination terminal such as the in-vehicle terminal adapts to the situation in the vehicle grasped by the captured image of the in-vehicle camera, or the like, the processing of the secondary filter is carried out.

For example, by setting the conditions to remove the advertisement in a case where the number of passengers in the taxi 15 does not match the number of empty seats in the store 12 (e.g., in a case where the number of passengers is greater than the number of empty seats) or to control the priority of the advertising information according to the combination of the sex and age of the passenger (e.g., to view an advertisement of a facility for children or avoid an age-restricted advertisement when a child is present), it is possible to effectively select the vehicle interior advertisement by the secondary filter. Only the advertising information suitable for the secondary filter among the advertising information received from the advertisement distribution system 11 is displayed in the room of the taxi 15.

The conditions for the secondary filter for the vehicle interior advertisement may be set in real time on the basis of the captured image of the in-vehicle camera, detection information from a sensor installed in the vehicle, or the like. Moreover, the condition for the secondary filter once set may be changed from time to time according to changes in the recognition result of the captured image and the detection information of the sensor.

### (3) Setting of Conditions for Secondary Filter for Advertisement Distribution to Information Terminal of Prospective Customer

In a case of distributing advertisements to the information terminal 16 of a prospective customer, the viewer of the advertising information can be specified. Thus, by adopting personal information and preferences of the user from this type of information terminal 16, it is possible to perform finer setting of conditions for the secondary filter and carry out the processing of the secondary filter. The user may input the conditions for the secondary filter to his/her own information terminal 16. For example, the following items can be set to be the conditions for the secondary filter, and further, two or more items can be combined to set the conditions for the secondary filter.
- Traveling time or distance: in a case where the user of the terminal does not desire to go too far, set the upper limit of the allowable traveling time or traveling distance.
- Budget range: in a case of accepting the service of the store 12, set the upper limit (budget) of the amount of money that the user of the information terminal 16 can pay.
- Contents of the service desired to be accepted: designate specific contents of the service desired to be accepted, such as a program or performers of a concert desired to be watched (e.g., a musical in which a specific actor performs is desired to be watched), a menu of dishes desired to be eaten (or conversely, dishes not desired to be eaten), and a restaurant desired to be visited.
- Companion condition: set conditions for companions such as when the customer is alone or when the customer is with someone.
- Time / days of week condition: view the advertising information and set conditions for time or days of the week to accept offers (discounts, coupons and the like).
- Schedule condition: set conditions according to the schedule of the user of the terminal. For example, if there is a spare time in the schedule, set conditions to view the advertising information.

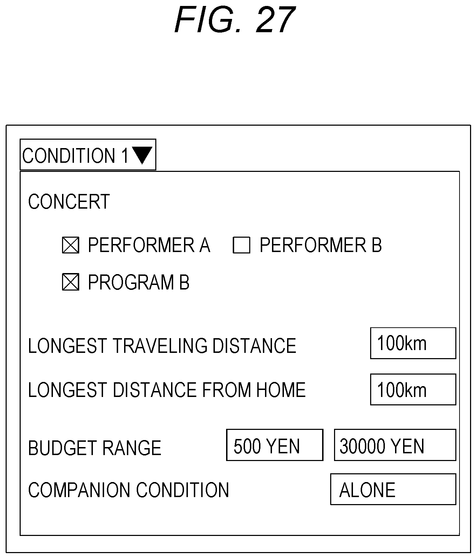

Fig. 27 shows a configuration example of a GUI used to set the conditions for the secondary filter for the advertisement for the information terminal 16. Via the GUI displayed on the screen shown in the drawing, the user of the information terminal 16 can designate performers and a program of a concert, the longest traveling distance from the present position, the longest distance from home, the budget range, and the companion condition.

Only the advertising information suitable for the secondary filter among the advertising information received from the advertisement distribution system 11 is displayed on the information terminal 16 possessed by the prospective customer. For example, advertising information regarding musicals in which a favorite actor of the prospective customer performs, and advertising information regarding a restaurant which provides a favorite menu of the prospective customer are displayed on the information terminal 16. Moreover, the information terminal 16 may control the display contents of the advertising information, and the like on the basis of the set conditions for the secondary filter. For example, a photograph of a favorite actor of the prospective customer is prominently displayed instead of displaying general advertising information regarding the musical, or a photograph of a menu that a prospective customer desires to eat is preferentially displayed instead of displaying the appearance of the restaurant's building or the list of menus.

The user can also set the conditions for the secondary filter in real time on the information terminal 16 and change the conditions once set. In addition, in a case where the conditions for the secondary filter are changed, the processing of the secondary filter is carried out again and reflected on the display of the information terminal 16 in real time.

The demographic information, such as personal taste, the number of persons riding in the taxi 15, and age and sex of each passenger, is individually different for each vehicle. The processing of the secondary filter, for which conditions are set on the basis of such information, can be concentratedly carried out by the advertisement distribution system 11, but the load of the system 11 is excessive. Therefore, the applicant believes that it is reasonable to perform the processing of the secondary filter individually at the distribution destination terminals such as the information terminals 16 possessed by the prospective customers and the in-vehicle terminals of the taxis 15 (i.e., the processing is performed separately for the primary filter and the secondary filter).

### F. Presentation Example of Advertising Information

In this section, examples of advertising information individually presented at the vehicle exterior advertisement and vehicle interior advertisement of the taxi and the information terminal 16 after the primary filter by the advertisement distribution system 11 and the secondary filter by each distribution destination terminal will be described.

### (1) Vehicle Exterior Advertisement of Taxi

The advertisement distribution system 11 creates advertising information for the vehicle exterior advertisement by using a representative photograph showing the service among the advertising creatives received from the store 12, which is the seat provider. For example, in a case of a restaurant, the advertising information is created by using images of the appearance of the store 12 and representative menus. In addition, in a case of a concert, the advertising information is created by using images of performers and a program.

Moreover, it is effective to include the contents of the offer that the store 12 can provide to customers by the advertisement distribution system 11. For example, the traveling cost using the taxi 15 is constant up to the passenger capacity (e.g., four persons), and as the number of visitors increases, a more advantageous offer can be provided (previously mentioned and see Fig. 3). Thereupon, it is effective to present in the advertising information an offer that is advantageous for a greater number of customers, such as "for four persons, maximum discount of ooo yen + free taxi fare" for the vehicle exterior advertisement.

Furthermore, in a case where the vehicle exterior advertisement is performed by using the side or the rear portion of the vehicle body, a person who has not ridden yet is the viewer of the advertisement so that it is not possible to know the preference thereof in advance. Thereupon, for the vehicle exterior advertisement distributed from the advertisement distribution system 11, the driver or the operating company of the taxi 15 mainly performs the processing of the secondary filter. For example, a taxi company with a sense of luxury selects advertising information regarding high-class restaurants and the like matching the concept by the secondary filter, and, conversely, a taxi company with an ordinary concept selects advertising information regarding ramen restaurants, cheap restaurants and the like by the secondary filter. In addition, for example, the setting of the conditions for the secondary filter may be changed according to time slots so as to select advertising information regarding lunch menus during time slots of lunch and select advertising information regarding dinner menus during time slots of dinner.

The prospective customer who saw the vehicle exterior advertisement of the taxi 15 hails the taxi 15 if the service provided by the store 12 displayed in the advertising information is his/her preference and the offer conditions match his/her convenience.

When hailed by the passenger, (the driver of) the taxi 15 checks with the passenger whether the ride is to accept the offer in the vehicle exterior advertisement or is a normal use of the taxi. In the former case, the taxi 15 heads to the destination store 12 and sends the customer to the destination store 12. Moreover, (the in-vehicle terminal of) the taxi 15 transmits the history of sending the customer at this time to the dispatch system 14.

Note that there is a possibility that a prospective customer misses the vehicle exterior advertisement of the taxi 15 or sees the vehicle exterior advertisement but could not hail the taxi 15. In such a case, the prospective customer can check that advertising information again by manipulating the information terminal 16 possessed by himself/herself, recall that taxi 15, or arrange another taxi nearby.

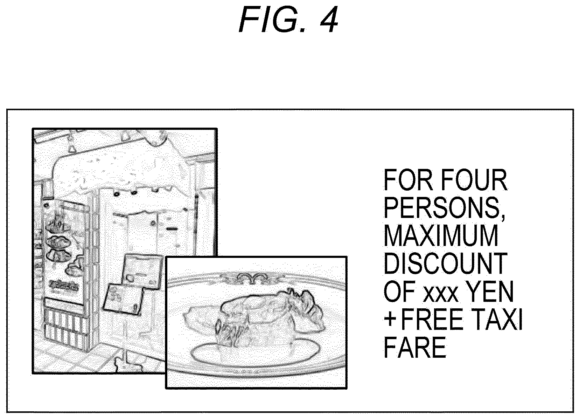

Each of Figs. 4 to 8 shows a presentation example of a vehicle exterior advertisement. Hereinafter, the vehicle exterior advertisement shown in each drawing will be briefly described.

Fig. 4 exemplifies a vehicle exterior advertisement distributed during dinner time slots. The vehicle exterior advertisement shown in the drawing is created by using images of the appearance of a restaurant and a representative menu (dinner and the like) during the dinner time and includes the contents of an offer which is more advantageous for a greater number of customers ("For four persons, the maximum discount of ○○○ yen + free taxi fare"). A taxi company with the concept matching a high-class restaurant processes the secondary filter on the advertising information and displays the advertising information shown in Fig. 4 outside the vehicle such as a display on the side of the vehicle body of the taxi 15 of the company.

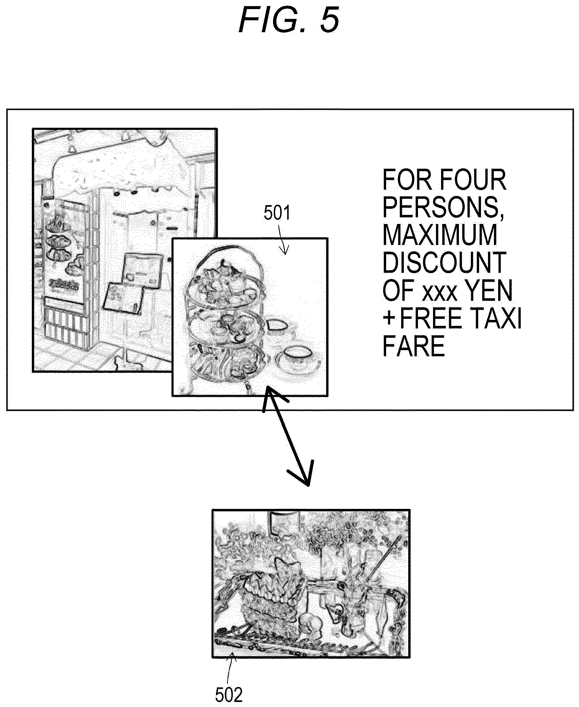

Fig. 5 exemplifies a vehicle exterior advertisement distributed during afternoon time slots. The vehicle exterior advertisement shown in the drawing is created by using images of the appearance of a restaurant and a representative afternoon menu (sweets and the like) and includes the contents of an offer which is more advantageous for a greater number of customers ("For four persons, the maximum discount of ooo yen + free taxi fare"). A taxi company with the concept matching a high-class restaurant processes the secondary filter on the advertising information and displays the advertising information shown in Fig. 5 outside the vehicle such as a display on the side of the vehicle body of the taxi 15 of the company. Note that an image 501 of the representative afternoon menu can be replaced with an image 502 of a menu that was reacted well (or popular) in the area or at time where or when the customer rode on the taxi 15 in the past.

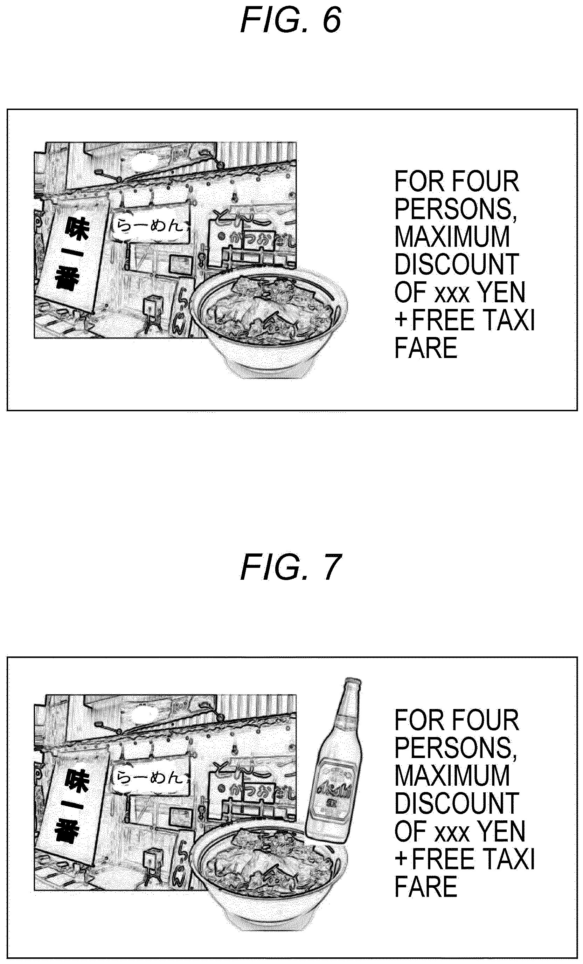

Fig. 6 exemplifies a vehicle exterior advertisement distributed during lunch time slots. The vehicle exterior advertisement shown in the drawing is created by using images of the appearance of a ramen restaurant and a ramen which is the representative menu and includes the contents of an offer which is more advantageous for a greater number of customers ("For four persons, the maximum discount of ○○○ yen + free taxi fare"). A taxi company with an ordinary concept processes the secondary filter on the advertising information and displays the advertising information shown in Fig. 6 outside the vehicle such as a display on the side of the vehicle body of the taxi 15 of the company.

Fig. 7 exemplifies a vehicle exterior advertisement distributed during dinner time slots. The vehicle exterior advertisement shown in the drawing is created by using images of the appearance of a ramen restaurant and a ramen which is the representative menu and includes the contents of an offer which is more advantageous for a greater number of customers ("For four persons, the maximum discount of ○○○ yen + free taxi fare"). In addition, the secondary filter processing is performed to include an image of a beer sold by a beer company, which has the same interest with the taxi company, in the advertisement in consideration of being away from residential areas and elementary and junior high schools, for example. A taxi company with an ordinary concept processes the secondary filter on the advertising information and displays the advertising information shown in Fig. 7 outside the vehicle such as a display on the side of the vehicle body of the taxi 15 of the company.

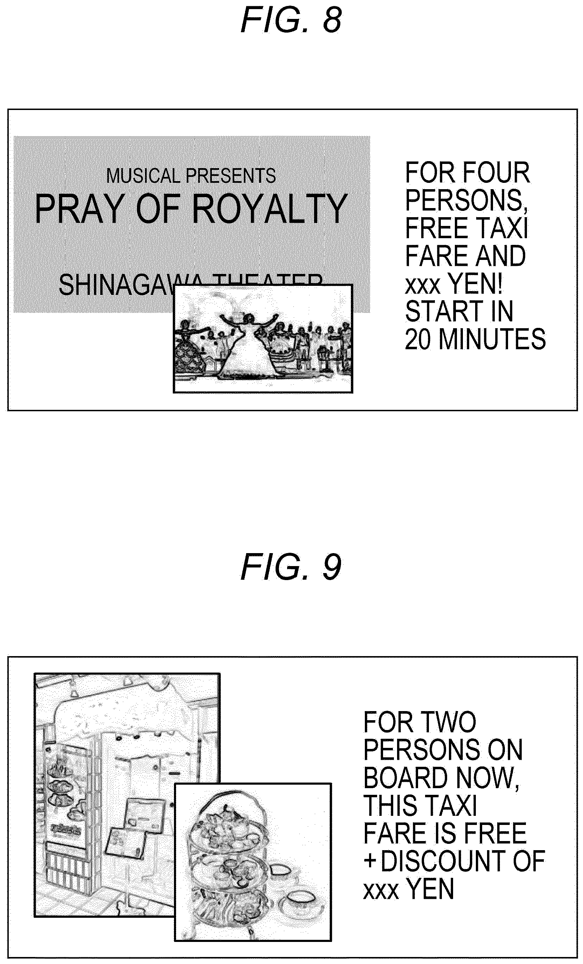

Fig. 8 exemplifies a vehicle exterior advertisement of a musical. The vehicle exterior advertisement of a play and the like is created by using photographs of a program and main performers and includes the contents of an offer which is more advantageous for a greater number of customers ("For four persons, the maximum discount of ooo yen + free taxi fare"). The theater has basically designated seats, and how many seats are available by when can be known by the empty seats for the screening which is not open yet. In addition, unlike restaurants, diners and the like, it is impossible for the customer to enter after the start time has passed. Thus, it is important to include the start time in the advertising information, such as "the show starts in 20 minutes."

### (2) Vehicle Interior Advertisement

The advertisement distribution system 11 creates advertising information for the vehicle interior advertisement by using a representative photograph showing the service among the advertising creatives received from the store 12, which is the seat provider. For example, in a case of a restaurant, the advertising information is created by using images of the appearance of the store 12 and representative menus. In addition, in a case of a concert, the advertising information is created by using images of performers and a program. Moreover, it is effective to include the contents of the offer that the store 12 can provide to customers by the advertisement distribution system 11.

Since the prospective customer has already ridden on the taxi 15 in the case of the vehicle interior advertisement, by performing face recognition using the captured image of the in-vehicle camera, the demographic information, such as the number of passengers and the sex and age of each passenger, can be inferred. Therefore, the setting for the conditions for the secondary filter and the processing of the secondary filter are performed for the vehicle interior advertising information so that the distribution destination terminal such as the in-vehicle terminal adapts to the situation in the vehicle such as passenger demographic information grasped by the captured image of the in-vehicle camera, or the like.

Furthermore, by changing the setting of the conditions for the secondary filter according to the present position of the taxi 15 that changes time to time, the contents of the offer presented in the vehicle interior advertisement are updated in real time. For example, advertising information including an offer, such as "free taxi fare + discount of ooo yen if two persons visit the store" is displayed inside the vehicle.

The passenger of taxi 15 sees the vehicle interior advertisement. If the service provided by the store 12 displayed in the advertising information is his/her preference and the offer conditions match his/her convenience, the passenger of the taxi 15 tells the driver of the taxi 15 that he/she will accept the offer on the spot (or change the destination to the store 12). The driver heads to the destination store 12 according to the instruction from the passenger. Moreover, (the in-vehicle terminal of) the taxi 15 transmits the history of sending the customer at this time to the dispatch system 14.

Each of Figs. 9 to 12 shows a presentation example of a vehicle interior advertisement. Hereinafter, the vehicle interior advertisement shown in each drawing will be briefly described.

Fig. 9 exemplifies a vehicle interior advertisement displayed in the taxi 15 on which two young women have ridden in the afternoon time slots. The vehicle interior advertisement shown in the drawing is created by using images of the appearance of a restaurant recommended for young women and the representative afternoon menus (sweets and the like). In addition, the advertising information includes the contents of an offer that adapts to the demographic information of two young women ("for the two persons on board now, this taxi fare is free + discount of ooo yen"). After performing face recognition on the captured image of the in-vehicle camera and identifying that two young women have ridden on, (the in-vehicle terminal and the like of) the taxi 15 processes the secondary filter and displays the advertising information shown in Fig. 9 on the display in the vehicle.

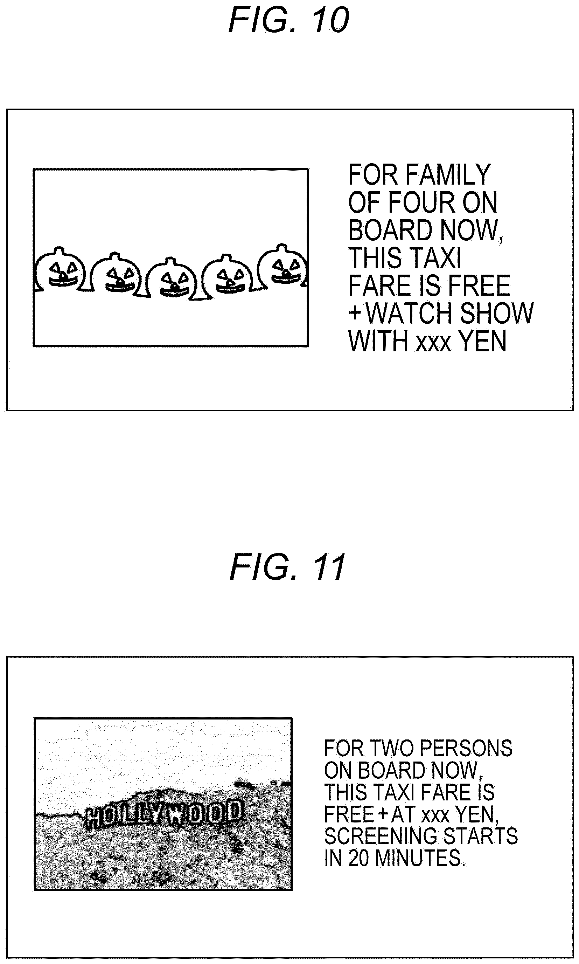

Fig. 10 exemplifies a vehicle interior advertisement displayed in the taxi 15 on which four people of a family including a little child have ridden. The vehicle interior advertisement shown in the drawing is advertising information regarding a show for children, which is selected by the secondary filter on the basis of demographic information such as the number of persons who have ridden on the taxi 15, and the age and sex thereof, and created on the basis of images of that show. In addition, the advertising information includes the contents of an offer that can be provided for the passengers of a family of four with a child ("for a family of four on board now, this taxi fare is free + watch the show with ○○○ yen"). After performing face recognition on the captured image of the in-vehicle camera and identifying that a family of four with a child has ridden on, (the in-vehicle terminal and the like of) the taxi 15 processes the secondary filter and displays the advertising information shown in Fig. 10 on the display in the vehicle.

Fig. 11 exemplifies a vehicle interior advertisement displayed in the taxi 15 on which two young man and woman have ridden. The vehicle interior advertisement shown in the drawing is created by using images of a movie (e.g., a representative scene) recommended for young men and women. In addition, the advertising information includes the contents of an offer that adapts to the demographic information of two young man and woman ("for the two persons on board now, this taxi fare is free + ○○○ yen"). In addition, since a customer cannot enter after the start time of the movie has passed, it is important to include the screening start time in the advertising information such as "Screening starts in 20 minutes.' After performing face recognition on the captured image of the in-vehicle camera and identifying that two young man and woman have ridden on, (the in-vehicle terminal and the like of) the taxi 15 processes the secondary filter and displays the advertising information shown in Fig. 11 on the display in the vehicle.

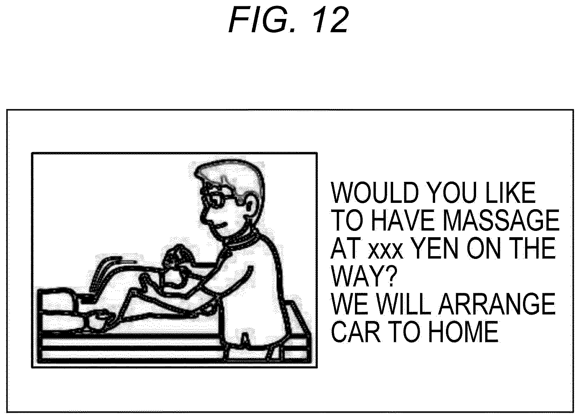

Fig. 12 exemplifies a vehicle interior advertisement displayed in the taxi 15 on which a man assumed to be a salaried worker on the way home has ridden. The vehicle interior advertisement shown in the drawing is created by using an image of a massage shop recommended for the man assumed to be a salaried worker on the way home. In addition, the advertising information includes the contents of an offer that adapts to the salaried worker on the way home (would you like to have a massage at ○○○ yen on the way?). Moreover, for the convenience after the massage, the advertising information may further include an offer such as dispatch to home ("we will arrange a car to home"). After performing face recognition on the captured image of the in-vehicle camera and identifying that a man assumed to be a salaried worker on the way home has ridden on, (the in-vehicle terminal and the like of) the taxi 15 processes the secondary filter and displays the advertising information shown in Fig. 12 on the display in the vehicle.

### (3) Advertisement for Information Terminal

The advertisement distribution system 11 creates advertising information for the vehicle interior advertisement by using a representative photograph showing the service among the advertising creatives received from the store 12, which is the seat provider. For example, in a case of a restaurant, the advertising information is created by using images of the appearance of the store 12 and representative menus. In addition, in a case of a concert, the advertising information is created by using images of performers and a program. Moreover, it is effective to include the contents of the offer that the store 12 can provide to customers by the advertisement distribution system 11.

Furthermore, in a case of distributing advertisements to the information terminal 16 of a prospective customer, the viewer of the advertising information can be specified. Thus, by performing finer setting of the conditions for the secondary filter and carrying out the processing of the secondary filter with this type of information terminal 16, it is possible to more effectively present the advertising information adopting personal information and preferences of the user.

For example, when the user designates what the user wants to eat in the information terminal 16, the information terminal sets the conditions for the secondary filter, processes the secondary filter on the advertising information distributed from the advertisement distribution system 11, and selects and displays advertising information including images of the appearance of a restaurant or diner that provides a menu which the user has designated to eat, the menu, and the like. Moreover, when the user designates information such as a program and performers desired to be watched in the information terminal 16, the information terminal 16 sets the conditions for the secondary filter, processes the secondary filter on the advertising information distributed from the advertisement distribution system 11, and selects and displays advertising information including images of the performers, the program, and the like. Furthermore, in the advertising information selected by the secondary filter, offer conditions including a discount rate, a usable traveling means to the destination, a traveling time or distance, a traveling cost, and the like are also displayed.

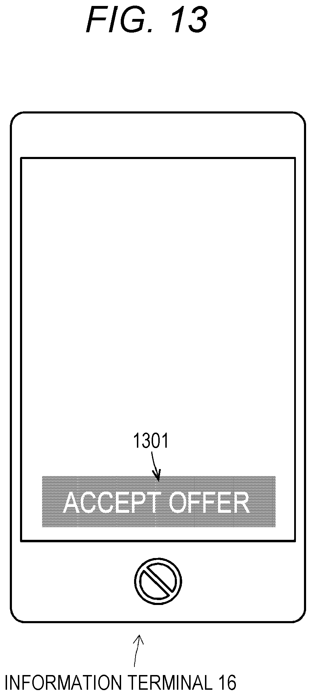

As shown in Fig. 13, on the screen of the information terminal 16 displaying the advertising information (including the offer), an offer acceptance button 1301 indicating the intention to accept the offer such as "accept offer" is disposed. When the user presses the offer acceptance button 13, the information terminal 16 notifies the advertisement distribution system 11 that the user has accepted the offer. The information terminal 16 also transmits a dispatch request to the dispatch system 14 (alternatively, the advertisement distribution system 11 may request the dispatch system 14 to arrange the taxi 15). The dispatch system 14 returns, to the requesting information terminal 16, information such as a waiting time until the dispatch, the present position of the arranged taxi 15 or the distance until arrival, and the information terminal 16 displays the received information in real time. Moreover, (the in-vehicle terminal of) the taxi 15 transmits the history of sending the customer at this time to the dispatch system 14.

Furthermore, the traveling means of the user, who has accepted the offer via the information terminal 16, to the store 12 is not limited to the taxi 15. For example, instead of dispatching the taxi 15 as described above, the advertisement distribution system 11 may transmit the coupons of transportation for the number of persons to the information terminal 16, and the user uses the coupons received by the information terminal 16 to travel to the store 12 by using that transportation.

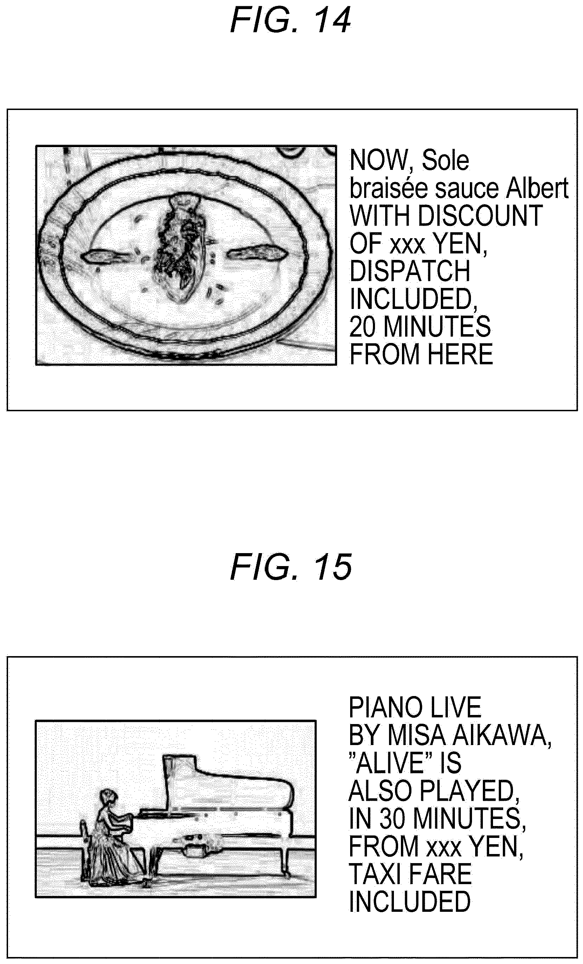

Each of Figs. 14 to 17 shows a presentation examples of an advertisement for the information terminal 16. Hereinafter, the advertisement for the information terminal 16 shown in each drawing will be briefly described.

Fig. 14 exemplifies an advertisement for the information terminal 16 displayed when the user designates a desired menu to eat. When an empty seat is available in a restaurant which provides a menu that the user wants to eat (Sole braiese sauce Albert), the advertisement distribution system 11 creates advertising information including an image of that menu, a highlighted promotional text and further an offer, performs the primary filter with the conditions such as the budget and the empty seat arrival time, and distributes the advertising information to the information terminal 16 possessed by the user. Since the received advertising information meets the conditions for the secondary filter, that is, the menu designated by the user, the information terminal 16 displays an advertisement with that menu highlighted as shown in Fig. 14 (now, Sole braisee sauce Albert with discount of ○○○ yen"). The advertising information also includes the contents of the offer ("discount of ○○○ yen discount, dispatch included") and information regarding the traveling time to the restaurant ("20 minutes from here").

Fig. 15 exemplifies an advertisement for the information terminal 16 displayed when the user designates a desired program and performer. The advertisement distribution system 11 creates advertising information including an announcement text matching images of the program (piano live, song titles) and the performer (Misa Aikawa) that the user wants to watch, the start time and the offer, performs the primary filter with the conditions such as the budget and the empty seat arrival time, and distributes the advertising information to the information terminal 16 possessed by the user. Since the received advertising information meets the conditions for the secondary filter, that is, the program and performer designated by the user, the information terminal 16 displays the advertisement including the performer, the program and the start time as shown in Fig. 15 ("Piano live by Misa Aikawa, "ALIVE" is also played, in 30 minutes). The advertising information also includes the contents of the offer ("from ○○○ yen, taxi fare included"). Note that, by including the start time in the advertising information, it is possible to implicitly suggest that the user can arrive at the hall by the start time.

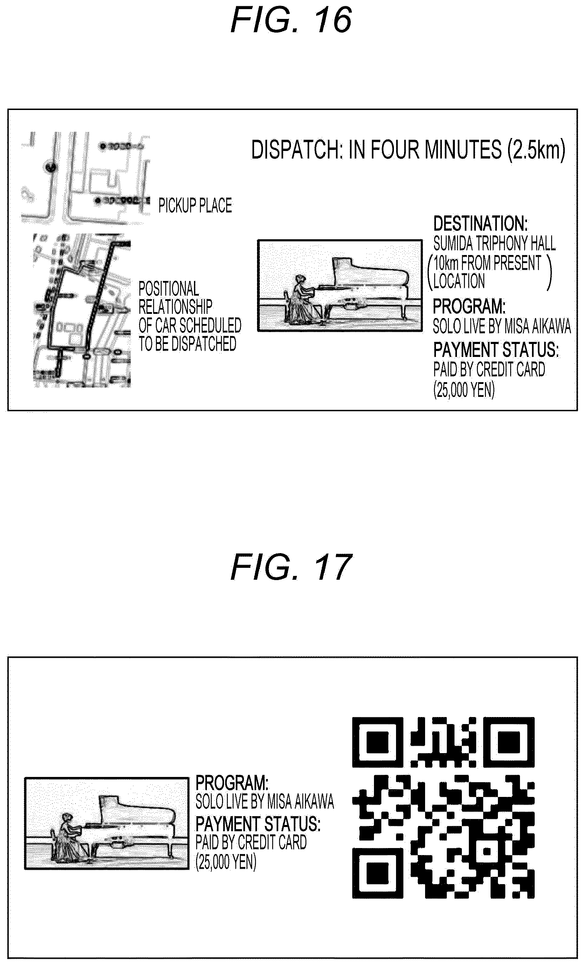

The user can indicate the intention to accept the offer by pressing the offer acceptance button disposed on the screen of the information terminal 16 (see Fig. 13). When the user presses the offer acceptance button, the information terminal 16 notifies the advertisement distribution system 11 that the user has accepted the offer. Fig. 16 exemplifies a display screen of the information terminal 16 that is shifted when the user has accepted the offer in the advertising information shown in Fig. 15. In the example shown in the drawing, a pickup place, a waiting time ("dispatch in four minutes (2.5 km)"), a position of a car scheduled to be dispatched, the destination ("Sumida Triphony Hall / (10 km from the present location)"), payment information ("paid by credit card / (25,000 yen)"), the contents of the offer, and the like are displayed, and conveniences of riding on the arranged taxi are planned.

In addition, Fig. 17 exemplifies a display screen of the information terminal 16 that is shifted when the user arrives at the destination. In the example shown in the drawing, in response to the arrival at the destination (Sumida Triphony Hall), the coupon corresponding to the offer accepted by the user is distributed from the advertisement distribution system 11. Then, the screen of the information terminal 16 displays a coupon code (QR (registered trademark) code) for identifying the received coupon. The user can receive the discount on the admission ticket and be admitted to enter by presenting the coupon code displayed on the screen of the information terminal 16 at the entrance of the hall or the like. In addition, the taxi 15 transmits the history of sending the customer to the dispatch system 14 when the completion of sending the customer to the destination is confirmed.

### G. Processing Flow

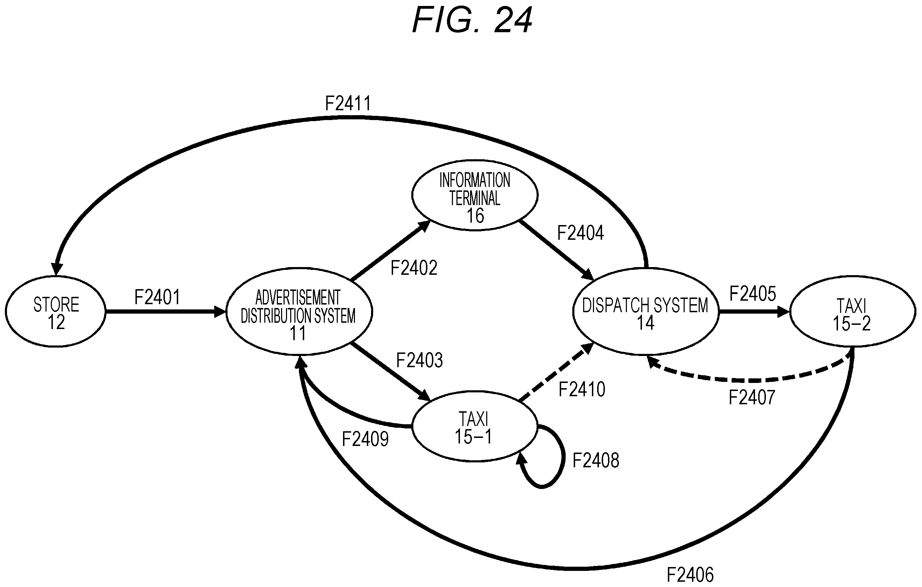

Fig. 24 schematically shows the exchanges in the information communication system 10 to occupy an empty seat in the store 12. In the example shown in the drawing, a traveling means to the store 12 is limited to a taxi for the convenience of explanation.

When an empty seat is predicted on the basis of the result of the store statistical processing, the store 12 performs a customer attraction action to the advertisement distribution system 11 (F2401).

At this time, the store 12 transmits the data, such as the service that can be provided by the store 12, the advertising creatives and the offer conditions, to the advertisement distribution system 11.

Additionally, the offer conditions transmitted to the advertisement distribution system 11 from the store 12 will be described. The store 12 calculates data regarding the arrival allowable time (the time slots desired to be visited), the requesting number of visitors, the (expecting) customer segments, the maximum allowable cost (total amount) and the maximum allowable cost (per visitor) on the basis of an empty seat rate, the number of empty seats, time slots, and the cost in a case of using the taxi 15, and transmits the data to the advertisement distribution system 11.

The advertisement distribution system 11 creates advertising information of the store 12 according to the customer attraction action from the store 12. The advertising information includes offer information such as discounts and coupons together with contents (advertising creatives) such as images and texts introducing the store 12. The advertisement distribution system 11 also creates three types of advertising information, advertisement for the information terminal 16 and the vehicle exterior advertisement and vehicle interior advertisement of the taxi, distributes the advertisement for the information terminal 16 to the information terminal 16 (F2402) as well as distributes the vehicle exterior advertisement and the vehicle interior advertisement to a taxi 15-1 (F2403).

Note that the advertisement distribution system 11 sets, as the distribution targets of the advertising information, the information terminal 16 and the taxi 15-1 that have passed the primary filter including the two conditions, the budget that can be used for the offer and the empty seat arrival time of the prospective customer. In a case of determining the distribution destination of the advertisement for the information terminal 16, suppose that the information terminal 16 and the user thereof are unique, then the age, sex, hobby and the like of the user may be added to the conditions for the primary filter.

On the other hand, the information terminal 16 displays only advertising information meeting the conditions for the secondary filter designated by the user among the received advertising information. The taxi 15-1 displays the vehicle interior advertisement meeting the conditions for the secondary filter set on the basis of the passenger demographic information and the like obtained from the recognition results of captured images of the in-vehicle camera on the display installed in the vehicle. In addition, the taxi 15-2 displays the vehicle exterior advertisement meeting the conditions for the secondary filter set under the initiative of the driver or the operating company of the taxi 15-1 on the display on the side of the vehicle body, and the like.

In a case of accepting the offer in the advertising information displayed on the screen, the user of the information terminal 16 indicates his/her intention, for example, by pressing the offer acceptance button on the screen (previously mentioned and see Fig. 13). Then, the information terminal 16 notifies the advertisement distribution system 11 that the user has accepted the offer. The information terminal 16 also transmits a dispatch request to the dispatch system 14 (F2404).

On the basis of the present position of the information terminal 16, the distance between the store 12, which is the destination of sending the customer, and the present position of the taxi, the distance of the planned traveling route to the store 12 in the case of sending the customer, the congestion information, and the like, the dispatch system 14 determines the taxi 15-2 to be dispatched and sends, to the taxi 15-2, an instruction of sending the customer (F2405).

When the taxi 15-2 heads to the present position of the information terminal 16 and rides that user, the taxi 15-2 notifies the advertisement distribution system 11 (F2406). The advertisement distribution system 11 performs stop processing of distributing the advertising information so as not to attract excessive prospective customers prodigally. Moreover, upon completion of sending the user of the information terminal 16 to the store 12, the taxi 15-2 notifies the dispatch system 14 (F2407). The dispatch system 14 records the information of sending the prospective customer to the store 12 for later billing processing.

Furthermore, when hailed by a passenger, (the driver of) the taxi 15-1, which is displaying the vehicle exterior advertisement, checks with the passenger whether the ride is to accept the offer in the vehicle exterior advertisement or is a normal use of the taxi (F2408). In the former case, the taxi 15 heads to the destination store 12, sends the customer to the destination store 12, and notifies the advertisement distribution system 11 (F2409). The advertisement distribution system 11 performs stop processing of distributing the advertising information so as not to attract excessive prospective customers prodigally. Moreover, upon completion of sending the user of the information terminal 16 to the store 12, the taxi 15-1 notifies the dispatch system 14 (F2410). The dispatch system 14 records the information of sending the customer ridden on the taxi 15-1 to the store 12 for later billing processing.

Furthermore, when the passenger tells (the driver of) the taxi 15-1 displaying the vehicle interior advertisement that the offer is accepted, the taxi 15-1 sends the customer to the destination store 12 according to the instruction from the passenger and notifies the advertisement distribution system 11 (F2409). The advertisement distribution system 11 performs stop processing of distributing the advertising information so as not to attract excessive prospective customers prodigally. Moreover, upon completion of sending the user of the information terminal 16 to the store 12, the taxi 15-1 notifies the dispatch system 14 (F2410). The dispatch system 14 records the information of sending the customer ridden on the taxi 15-1 to the store 12 for later billing processing.

Thereafter, the dispatch system 14 bills the store 12 for the remuneration according to the achievement of sending the customer to the store 12 (F2411).

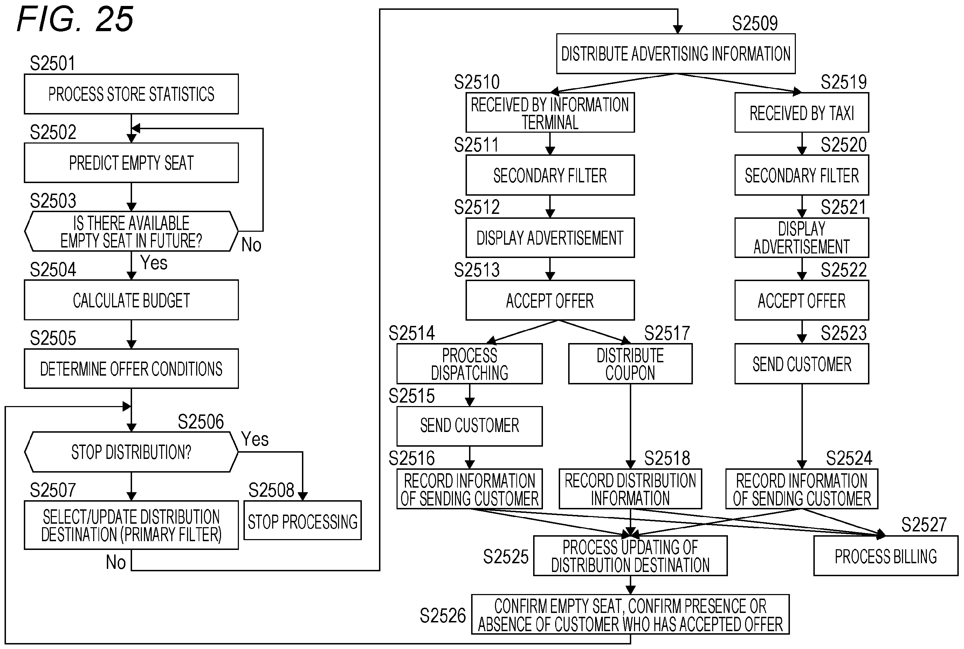

Fig. 25 schematically shows a flow of processing in the information communication system 10 to occupy an empty seat in the store 12. In the example shown in the drawing, a traveling means to the store 12 is limited to a taxi for the convenience of explanation.

The store 12 statistically processes various store information such as purchase, sales and the empty seat trend of the seats and stores the information in the store database 13 (S2501).

Then, the store 12 predicts the time when a seat is available on the basis of the present visit situation and the past statistics stored in the store database 13 (S2502).

Herein, when an available empty seat in future is predicted (Yes in S2503), the store 12 calculates the budget that can be used for the offer to a prospective customer for the predicted empty seat (S2504), determines the conditions for the offer to the prospective customer (S2505) and requests the advertisement distribution system 11 to distribute the advertising information. Upon the distribution request, the store 12 transmits the following information (1) to (4) to the advertisement distribution system 11.
(1) Providable Services
   Menus and services provided by the store 12, age group or sex appropriate for visit, and the like
(2) Advertising Creatives
(3) Offer Conditions
   Maximum budget (e.g., a function with a time as an argument or table format), prospective visit time (present time + predicted traveling time), and the like
(4) Distribution Target
   The time desired to arrive at the empty seat in the store 12, the number of empty seats

The advertisement distribution system 11 selects or selects an area where the traveling time (empty seat arrival time) to store, which is the requestor, and the budget that can be used for the offer can be secured, that is, the distribution destination of the advertising information (S2507). Then, the advertisement distribution system 11 creates the advertising information of the store 12 and distributes the advertising information to each selected distribution destination (S2509).

In the selection/update processing of the distribution destination of the advertising information carried out in S2507, the information terminal 16 and the taxi 15 to be the distribution destinations are selected by using the primary filter with the main conditions of the empty seat arrival time and the budget. The empty seat arrival time can be calculated on the basis of congestion on the predicted traveling route to the store 12 (empty seat) from the present position of the distribution destination, the timetable of the public transportation, and the like. The information terminal 16 and (the in-vehicle terminal of) the taxi 15 whose calculated empty seat arrival time is before the predicted time t1 when the empty seats are normally occupied at the store 12 are selected as the distribution destinations. In addition, the information terminal 16 and (the in-vehicle terminal of) the taxi 15 whose cost necessary for sending the customer is within a range not exceeding the budget that can be used for the offer are selected as the distribution destinations. The distribution destination of the advertising information is updated by periodic batch processing, but may be updated in response to an event of occurrence of empty seat or may be updated at any time as time passes.

The advertising information includes information such as the contents of the service provided by the store 12, the offer conditions, the traveling distance to the store 12, and the traveling cost. Moreover, the advertisement for the information terminal 16 and the vehicle exterior advertisement and the vehicle interior advertisement of the taxi are created. The advertisement distribution system 11 distributes the advertising information to all the information terminals 16 and the taxis 15 selected by the primary filter in the above S2507.

After receiving the advertisement for the information terminal 16 (S2510), the information terminal 16 filters on the basis of the conditions for the secondary filter designated by the user (S2511) and presents only advertising information matching the demand of the user (S2512).

When the user accepts the offer via the information terminal 16 (S2513), the information terminal 16 performs dispatch processing (S2514). For the dispatch processing, the taxi 15 may be dispatched to the present position of the user via the dispatch system 14, or the information terminal 16 may guide the user to a convenient location for dispatching the taxi 15. Then, when the arranged taxi 15 finishes sending the user to the store 12 (S2515), the history of sending the customer is recorded in the dispatch system 14 (S2516). In addition, the information terminal 16 notifies the advertisement distribution system 11 that the user has accepted the offer, and the advertisement distribution system 11 distributes the coupon to the information terminal 16 (S2517) as well as records the distribution history of the coupon (step S2518).

In addition, when (the in-vehicle terminal of) the taxi 15 has received the vehicle exterior advertisement and the vehicle interior advertisement (S2519), the vehicle exterior advertisement is filtered on the basis of the conditions for the secondary filter set under the initiative of the driver or the operating company of the taxi 15 as well as the vehicle interior advertisement is filtered on the basis of the conditions for the secondary filter set on the basis of the passenger demographic information (S2520), and only the vehicle exterior advertisement and the vehicle interior advertisement meeting the conditions are respectively displayed outside and inside the taxi 15 (S2521).

After confirming that the ride is to accept the offer in the vehicle exterior advertisement when hailed or told to accept the offer in the vehicle interior advertisement by the passenger (S2522), (the driver of) the taxi 15 sends the passenger directly to the store 12 (S2523), and the history of sending that customer is recorded in the dispatch system 14 (S2524).

The advertisement distribution system 11 and the distribution system 11 perform billing processing to the store 12 on the basis of the information of sending the prospective customer (the user of the information terminal 16 and the passenger in the taxi 15) to the store 12 and the distribution information of the coupon (S2527).

Thereafter, the advertisement distribution system 11 performs processing of updating the distribution destination of the advertising information (S2525). This is because, as time passes, a time to the predicted time t1 when empty seats are normally occupied becomes short. Thus, it is no longer necessary to distribute the advertising information to the distribution destination that cannot visit by that time t1. In addition, as time passes, the budget that can be used for the offer changes so that it is necessary to update the offer conditions.

Moreover, the store 12 checks the empty seat at the present time and the presence or absence of the customer who has accepted the offer (S2526). Then, because the empty seat is occupied or the time is at the predicted time t1 when the empty seats are normally occupied, the advertisement distribution system 11 stops distributing the advertising information (Yes in S2506) and performs distribution stop processing (S2508). On the other hand, if the distribution of the advertising information is not stopped yet (No in S2506), the distribution processing of the advertising information similar to the above is continued.

Hereinafter, the processing performed at each stage in the information communication system 10 will be described.

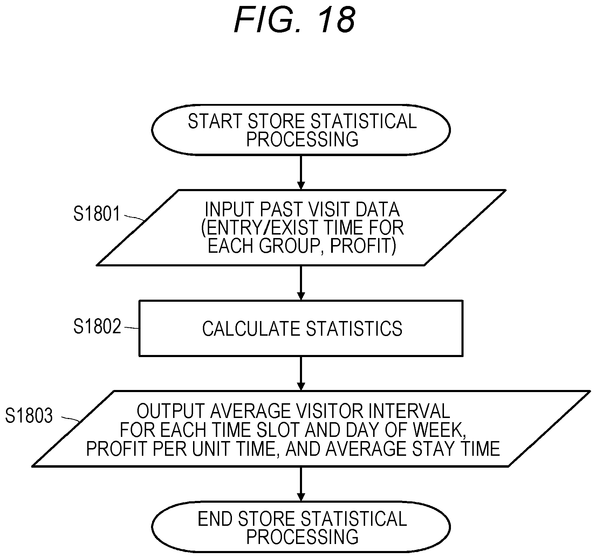

Fig. 18 shows the procedure of the store statistical processing carried out at the store 12 in the form of a flowchart.

The store 12 inputs the past visit data (including entry/exit time of each group, profit) (step S1801), executes statistical calculation (step S1802), and calculates average visitor intervals for each time slot and day of a week, a profit per unit time, and an average customer's stay time (step S1803). Then, the results of the statistical processing are stored in the store database 13.

Note that attributes that serve as delimiters of visit data such as time slots and days of week are arbitrary in the store statistical processing. For example, one day is roughly divided into three to four time slots, and one week is divided into weekdays and holidays so that there are eight patterns in total to execute the statistical calculation in Step S1802. In addition, in the statistical calculation, statistics such as the average visitor interval (t1 - t0) for each pattern of the time slots and the days of week, the profit per unit time (C / (t1 - t0)), and the average stay time are calculated. The average stay time can be used to predict the occurrence of an empty seat in the store 12.

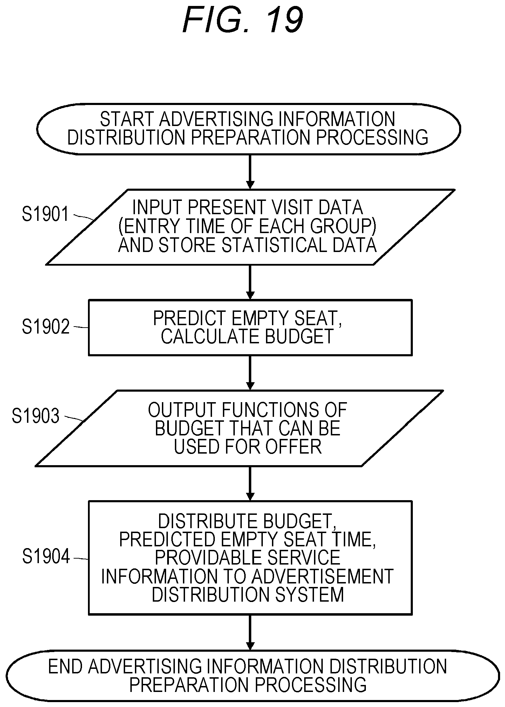

Moreover, Fig. 19 shows the procedure of the advertising information distribution preparation processing carried out at the store 12 in the form of a flowchart.

The store 12 inputs the present visit data in the store 12 (entry time of each group) and the store statistical data (step S1901). Suppose that the store statistical data is calculated according to the processing procedure shown in Fig. 18 at the store 12 and stored in the store database 13.

Next, the store 12 calculates the time when the next empty seat occurs in the store 12 and the budget that can be used for the offer (discounts, coupons, and the like) to the prospective customer (Step S1902), and outputs the functions of the budget (temporal transition of the budget) that can be used for the offer as shown in Fig. 2 (Step S1903). Then, the store 12 transmits these functions of the budget to the advertisement distribution system 11 together with the information regarding the service that can be provided by the store 12 and the advertising creatives (Step S1904).

The advertisement distribution system 11 creates the advertising information to be distributed to prospective customers on the basis of the functions of the budget, the service that can be provided by the store 12, and the advertising creatives received from the store 12. The advertising information includes the offer conditions (discounts, coupons and the like). In a case where the service that can be provided by the store 12 and the offer conditions change as time passes, the advertisement distribution system 11 successively updates the advertising information. Moreover, the advertisement distribution system 11 may create a plurality of types of advertising information for one store 12 according to demographic information and preferences of the prospective customers (or conditions for the secondary filter). Furthermore, for the advertising information to be distributed to a vehicle such as the taxi 15, the vehicle exterior advertisement and the vehicle interior advertisement may be created separately.

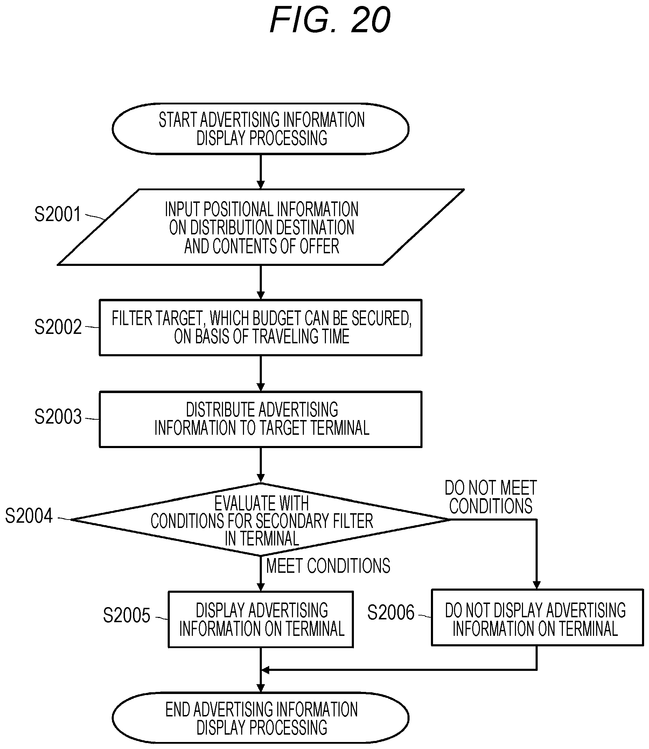

Fig. 20 shows the processing procedure for displaying the advertising information at the distribution destination terminal in the form of a flowchart. The distribution destination terminal includes the information terminal 16 possessed by the prospective customer and the in-vehicle terminal mounted on the taxi 15 (or may be other traveling means for sending the prospective customer to the store 12). The processing procedure shown in Fig. 20 is realized by a cooperative operation of the advertisement distribution system 11 and the distribution destination terminal.

When the positional information of each distribution destination terminal and the contents of the offer that can be provided by the store 12 are inputted (Step S2001), the advertisement distribution system 11 filters the distribution destination of the advertising information on the basis of the positional information to the store 12 from the present position of the distribution destination terminal (Step S2002).

The filtering performed herein is the primary filter (previously mentioned). That is, on the basis of the functions of the budget received from the store 12, the advertisement distribution system 11 identifies the area where the budget that can be used for the offer becomes positive in consideration of the traveling time to the store 12 and limits the distributions destinations to the terminals in that area.

Then, the advertisement distribution system 11 distributes the advertising information to each distribution destination terminal filtered in Step S2002 (Step S2003).

The advertising information distributed from the advertisement distribution system 11 includes information regarding the service that can be provided by the store 12, the offer conditions (discounts, coupons and the like), information regarding the traveling time and traveling cost to the store 12, and the like. Moreover, the advertising information to be distributed is roughly classified into two types, the advertising information for the taxi 15 (or the in-vehicle terminal of the taxi 15) and the advertising information for the information terminal 16 of the first-time prospective customer. The former is further classified into the vehicle exterior advertisement and the vehicle interior advertisement.

After that, the processing is performed at each distribution destination terminal. The distribution destination terminal filters the received advertising information according to the conditions for the secondary filter set in the terminal (Step S2004). Then, the distribution destination terminal displays the advertising information that has passed the secondary filter (Step S2005), but does not display and discards the advertising information that has not passed the secondary filter (Step S2006).

For example, in a case where the distribution destination terminal is the in-vehicle terminal of the taxi 15 and receives the vehicle exterior advertisement, filtering is performed on the basis of the conditions (competitive conditions, the distance of sending the customer, and the like) for the secondary filter set under the initiative of the driver or the operating company of the taxi 15, and only the vehicle exterior advertisement passed this secondary filter is displayed on the display on the side of the vehicle body, and the like.

Moreover, in a case where the distribution destination terminal is the in-vehicle terminal of the taxi 15 and receives the vehicle interior advertisement, filtering is performed, for example, on the basis of the conditions for the secondary filter matching the passenger demographic information obtained by performing face recognition on the captured image of the in-vehicle camera, and only the vehicle interior advertisement passed this secondary filter is displayed on a display on the side of the vehicle body, and the like.

Furthermore, in a case where the distribution destination terminal is the information terminal 16 possessed by the user (prospective customer) and receives the advertisement for the information terminal 16, filtering is performed, for example, on the basis of the conditions for the secondary filter designated by the user in the information terminal 16, and only the advertisement for the information terminal 16 passed this secondary filter is displayed on the screen of the information terminal 16.

In short, the traveling time to the store 12 (empty seat) is calculated on the basis of the positional information of the distribution destination, the distribution destination within the range that the budget that can be used for the offer can be secured is narrowed down, and then the distribution processing of the advertising information is performed. Thereafter, the distribution destination terminal filters the received advertising information according to the conditions set for each terminal and displays the advertising information.

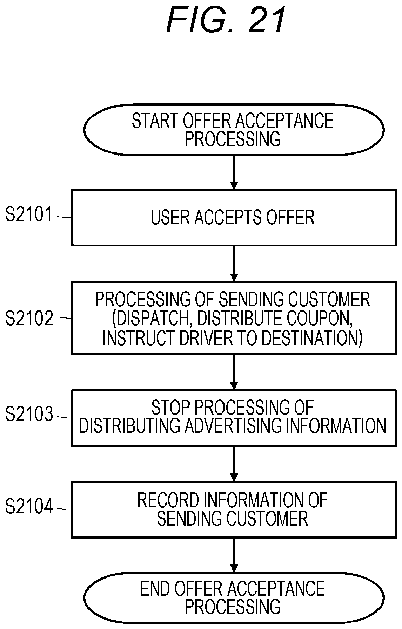

Fig. 21 shows the processing procedure when the prospective customer accepts the offer at the distribution destination of the advertising information in the form of a flowchart. The advertisement distribution system 11 takes the lead in carrying out the processing procedure shown in the drawing.

First, the prospective customer accepts the offer (Step S2101). For example, when the taxi 15 displaying the vehicle exterior advertisement is hailed, the driver confirms that the passenger accepts the offer presented by the vehicle exterior advertisement or rides on the taxi as a normal use. Moreover, in a case where the passenger of the taxi 15 accepts the offer presented by the vehicle interior advertisement, the passenger tells the acceptance of the offer to the driver. Furthermore, in a case where the user accepts the offer in the advertising information displayed on the user's own information terminal 16, the user presses the offer acceptance button on the screen (see Fig. 13). In addition, the distribution destination terminal notifies the advertisement distribution system 11 that the offer has been accepted.

Then, in response to the acceptance of the offer of the store 12, processing of sending the customer is carried out (S2102). When the offer is accepted at the information terminal 16, the advertisement distribution system 11 performs the dispatch (arranges the taxi 15 to the location of that user) and instructs the driver of the taxi 15 to the destination (store 12) via the distribution system 14. The advertisement distribution system 11 also distributes information such as a coupon to the information terminal 16 of the user who has accepted the offer.

Moreover, the advertisement distribution system 11 performs stop processing of distributing the advertising information so that other prospective customers do not redundantly accept the offer (i.e., not to attract customers prodigally exceeding the number of empty seats in the store 12) (Step S2103).

Then, the advertisement distribution system 11 and the dispatch system 14 record the information of sending the prospective customer to the store 12 for later billing processing (Step S2104).

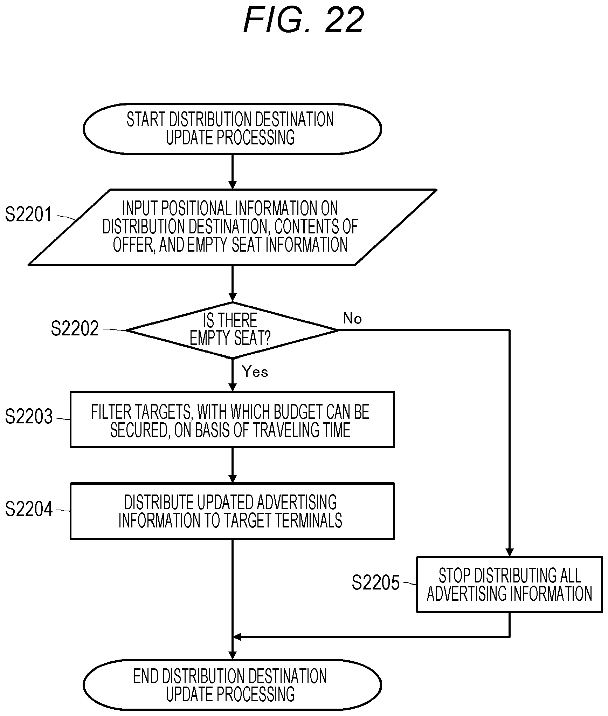

Fig. 22 shows the processing procedure of updating the distribution destinations of the advertising information by the advertisement distribution system 11 in the form of a flowchart. As time passes, the budget that can be used for the offer changes, and it is necessary to update the offer conditions. In addition, as time passes, a time to the predicted time t1 when empty seats are normally occupied becomes short. Thus, it is no longer necessary to distribute the advertising information to the distribution destination that cannot visit by that time t1. Moreover, if empty seats in the store 12 are occupied before the time t1, it is necessary to stop distributing the advertising information. Therefore, the advertisement distribution system 11 updates the distribution destinations of the advertising information according to the processing procedure shown in Fig. 22.

First, the advertisement distribution system 11 inputs the positional information of each distribution destination terminal, the contents of the offer that the store 12 can provide at this time, and empty seat information of the store 12 (Step S2201).

Then, the advertisement distribution system 11 checks whether the store 12 still has an empty seat (Step S2202) .

Herein, when the empty seat in the store 12 is already occupied (No in Step S2202), the advertisement distribution system 11 stops distributing all the advertising information (the vehicle exterior advertisement, the vehicle interior advertisement, the advertisement for the information terminal 16, and the like) relating to the store 12 (Step S2205) and ends the processing routine.

On the other hand, when the store 12 still has an empty seat (Yes in Step S2202), the advertisement distribution system 11 filters the distribution destination terminals on the basis of the traveling time (i.e., a time between the present time and the predicted time t1 when the empty seats are normally occupied) (Step S2203). That is, the area where the budget that can be used for the offer becomes positive is identified, and the distribution destination is limited to the terminals in that area.

Then, the advertisement distribution system 11 distributes the advertising information with the updated offer conditions and the like to each distribution destination terminal filtered again in Step S2203 (S2204).

The advertisement distribution system 11 carries out the processing procedure shown in Fig. 22 as periodic batch processing, but the processing procedure may be carried out in response to an event of occurrence of empty seats or may be carried out by a method such as updating at anytime due to the passage of time.

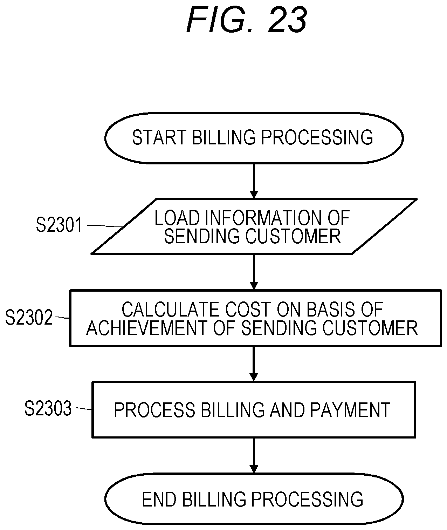

Fig. 23 shows the processing procedure of billing the store 12 for the remuneration according to the achievement of sending the prospective customer to the store 12 by the advertisement distribution system 11 and the dispatch system 14 in the form of a flowchart.

The advertisement distribution system 11 and the dispatch system 14 load the information of sending the customer recorded in Step S2104 of the processing procedure shown in Fig. 21 (Step S2301).

Then, each of the advertisement distribution system 11 and the dispatch system 14 calculates the cost that can be billed to the store 12, that is, the remuneration on the basis of the achievement of sending the customer (i.e., the degree of contribution to occupying empty seats in the store 12) on the basis of the information of sending the customer (Step S2302).

Next, each of the advertisement distribution system 11 and the dispatch system 14 bills the store 12 for the cost calculated in Step S2302, and the store 12 performs payment processing accordingly (Step S2303).

According to the processing procedure as shown in Fig. 23, the advertisement distribution system 11 and the dispatch system 14 can bill the store 12 for the remuneration according to the achievement of sending the customer (i.e., the degree of contribution to occupying empty seats in the store 12). Moreover, by analyzing the information of sending the customer to identify the client attributes and the area where the offer (discounts, coupons and the like) acceptance rate is high, the advertisement distribution system 11 and the store 12 can utilize those to narrow down the future distribution destination of the advertising information (i.e., set the conditions for the primary filter) and for the marketing of the store 12.

According to the information communication system 10 of the present embodiment, by presenting the offer conditions to the prospective customers through the distribution of the advertising information from the advertisement distribution system 11, the store 12, which is the seat provider, can attract customers by using an appropriate cost (budget) according to expected profits generated by occupancy of empty seats.

Furthermore, the advertisement distribution system 11 and the dispatch system 14 can obtain profits according to the achievement of sending the customer to the store 12.

In addition, the user who visits the store 12 can see the advertising information distributed from the advertisement distribution system 11 to accept the offer that suits the preference and convenience of the user and further takes into consideration of a traveling means such as the taxi 15 or other transportation.

### INDUSTRIAL APPLICABILITY

The technologies disclosed in this specification have been described above in detail with reference to specific embodiments. However, it is obvious that those skilled in the art can make modifications and substitutions of the embodiments in a scope without departing from the gist of the technologies disclosed in this specification.

The information communication system 10 described in this specification is configured with the store 12 which is the seat provider, the advertisement distribution system 11 which distributes the advertising information of the store 12 to prospective customers, and the dispatch system 14 which runs the taxi business of sending the customer, who has accepted the offer, to the store 12, but this system configuration is arbitrary.

For example, the store 12 may construct an advertisement distribution system 11 which distributes the store's own advertising information, or one advertisement distribution system 11 may undertake advertisement distribution business for a plurality of stores.

Moreover, each of a plurality of taxi companies may install a dispatch system, and the advertisement distribution system 11 may appropriately select any one of the taxi companies to request the sending of the customer. Alternatively, a taxi company may run the advertisement distribution system 11 and the dispatch system 14 together.

In short, the technologies disclosed in this specification have been described in the form of exemplification, and the contents of the description in this specification should not be interpreted strictly. To judge the gist of the technologies disclosed in this specification, the scope of claims should be taken into consideration.

Note that the technologies disclosed in this specification can adopt the following configurations.
(1) An information distribution apparatus including:
   a selection unit which selects a distribution target of advertising information regarding a predetermined business operator on the basis of a traveling time or a traveling cost to the business operator; and
   a distribution unit which distributes the advertising information to the distribution target selected.
(2) The information distribution apparatus according to (1), in which the selection unit selects the distribution target on the basis of the traveling time or the traveling cost predicted to be required when the distribution target travels to the business operator.
(3) The information distribution apparatus according to (1), in which the distribution target is a vehicle or a mobile communication terminal, and
   the selection unit selects the distribution target on the basis of positional information of the vehicle or the mobile communication terminal.
(4) The information distribution apparatus according to (1), in which the distribution target is a vehicle or a mobile communication terminal, and
   the selection unit selects the distribution target on the basis of a traffic situation of a road.
(5) The information distribution apparatus according to (1), in which the business operator is a seat provider who provides a predetermined service to a client having visited a seat, and
   the selection unit selects the distribution target on the basis of a traveling time and a traveling cost to the seat.
(6) The information distribution apparatus according to (5), in which the selection unit selects the distribution target on the basis of a travelable range by a predicted time when guidance of the client becomes unnecessary for the business operator.
(6-1) The information distribution apparatus according to (6), in which the selection unit selects, as the distribution target, a mobile communication terminal possessed by a prospective customer or a mobile body in the travelable range by the predicted time.
(7) The information distribution apparatus according to (1), in which the selection unit selects the distribution target on the basis of a budget of the business operator.
(7-1) The information distribution apparatus according to (7), in which the selection unit selects the distribution target so that a combination of a discount or a coupon given to a prospective customer and coverage of a traveling cost to the seat is within a range of the budget.
(7-2) The information distribution apparatus according to (7-1), in which a more advantageous offer is set for the distribution target with a greater number of visitors in a case where the mobile body, with which the traveling cost is constant regardless of a number of persons, is used.
(8) The information distribution apparatus according to (5), in which the selection unit selects the distribution target on the basis of a budget that transitions according to a time to a predicted time in a travelable range by the predicted time when an empty seat is occupied at the seat provider.
(9) The information distribution apparatus according to (1), in which the distribution unit distributes the advertising information including a message to a client from the business operator and changes the advertising information according to the traveling time.
(9-1) The information distribution apparatus according to (1), in which the distribution unit distributes the advertising information regarding a service that can be provided by the business operator.
(9-2) The information distribution apparatus according to (9), in which the distribution unit distributes the advertising information using an advertising creative transmitted from the business operator.
(9-3) The information distribution apparatus according to (9), in which the distribution unit distributes the advertising information including, as the message, the offer which is advantageous to the distribution target with a short traveling time to a seat provided by the business operator and disadvantageous to the distribution target who arrives after a time when an empty seat is predicted.
(10) The information distribution apparatus according to (1), in which the distribution unit distributes the advertising information according to the traveling cost or the mobile body.
(10-1) The information distribution apparatus according to (10), in which the distribution unit distributes the advertising information including a more advantageous offer to the distribution target with a greater number not exceeding a number of empty seats in a case of using the mobile body with which the traveling cost does not change significantly due to a number of passengers in the mobile body.
(10-2) The information distribution apparatus according to (10), in which the distribution unit distributes the advertising information including a coupon that can be used for the mobile body.
(10-3) The information distribution apparatus according to (10), further including an arrangement unit which arranges a mobile body for sending the distribution target to an empty seat from a present position.
(11) The information distribution apparatus according to (1), in which the distribution unit distributes at least one of advertising information for a mobile communication terminal possessed by a prospective customer of the business operator, advertising information to be displayed on an outside of a housing of a mobile body, and advertising information displayed so as to be viewable by a passenger of the mobile body.
(12) The information distribution apparatus according to (1), in which the distribution unit stops distributing the advertising information in response to receiving a notification that a customer has been sent to the business operator.
(12-1) The information distribution apparatus according to (12), in which the distribution unit stops distributing the advertising information in response to that an empty seat has been occupied at the seat provider.
(13) The information distribution apparatus according to (1), in which the selection unit updates the distribution target after the distribution unit distributes the advertising information.
(13-1) The information distribution apparatus according to (13), in which the selection unit updates the distribution target in response to that a time to a predicted time when guidance of a client becomes unnecessary for the business operator becomes short.
(13-2) The information distribution apparatus according to (13), in which the selection unit excludes one who cannot arrive at the seat by the predicted time when the guidance of the client becomes unnecessary for the business operator from the distribution target.
(13-3) The information distribution apparatus according to (13), in which the selection unit excludes one whom a budget that can be used for an offer cannot be secured from the distribution target.
(14) The information distribution apparatus according to (1), further including a recording unit which records a history of the advertising information distributed by the distribution unit.
(15) The information distribution apparatus according to (1), further including a recording unit which records a history of sending a prospective customer to the business operator.
(16) An information distribution method including:
   a selection step of selecting a distribution target of advertising information regarding a predetermined business operator on the basis of a traveling time and a traveling cost to the business operator; and
   a distribution step of distributing the advertising information to the distribution target selected.
(17) An information display apparatus, including:
   a receiving unit which receives the advertising information distributed from the information distribution apparatus according to (1);
   a filter processing unit which filters the advertising information received, on the basis of a condition set by an operating company of a mobile body, which sends a prospective customer to the business operator, or by a manipulator of the mobile body; and
   a display unit which displays, on an outside of a housing of the mobile body, the advertising information filtered.
(18) An information display apparatus including:
   a receiving unit which receives the advertising information distributed from the information distribution apparatus according to (1);
   a recognition unit which recognizes a passenger of a mobile body;
   a filter processing unit which filters the advertising information received, on the basis of a condition set according to a recognition result by the recognition unit; and
   a display unit which displays, at a place where the passenger can see in a housing of the mobile body, the advertising information filtered.
(19) An information display apparatus including:
   a receiving unit which receives the advertising information distributed from the information distribution apparatus according to (1);
   an input unit with which a user performs an input;
   a filter processing unit which filters the advertising information received, on the basis of a condition designated via the input unit; and
   a display unit which displays the advertising information filtered.
(20) The information display apparatus according to any one of (17) to (19), in which the display unit displays the advertising information including a message to a client from the business operator, and
   the information display apparatus further includes a customer sending processing unit which sends a prospective customer, who has received the message, to the seat.
(21) The information display apparatus according to (20), further including a recording unit which records a history of sending the prospective customer, who has received the messages, to the seat.
(22) An information display method including:
   a receiving step of receiving the advertising information distributed from the information distribution apparatus according to (1);
   a filter processing step of filtering the advertising information received, on the basis of a condition set by an operating company of a mobile body, which sends a prospective customer to the business operator, or by a manipulator of the mobile body; and
   a display step of displaying, on an outside of a housing of the mobile body, the advertising information filtered.
(23) An information display method including:
   a receiving step of receiving the advertising information distributed from the information distribution apparatus according to (1);
   a recognition step of recognizing a passenger of a mobile body;
   a filter processing step of filtering the advertising information received, on the basis of a condition set according to a recognition result by the recognition unit; and
   a display step of displaying, at a place where the passenger can see in a housing of the mobile body, the advertising information filtered.
(24) An information display method including:
   a receiving step of receiving the advertising information distributed from the information distribution apparatus according to (1);
   an input step of performing an input by a user;
   a filter processing step of filtering the advertising information received, on the basis of a condition designated in the input step; and
   a display step of displaying the advertising information filtered.
(25) An information distribution system including:
   a selection unit which selects a distribution target of advertising information regarding a predetermined business operator on the basis of a traveling time or a traveling cost to the business operator;
   a distribution unit which distributes the advertising information selected to the distribution target;
   a filter processing unit which filters the advertising information which should be displayed at the distribution target; and
   a display unit which displays the advertising information filtered.
(26) The information distribution system according to (25), in which the selection unit selects the distribution target on the basis of a travelable range by a predicted time when guidance of a client becomes unnecessary for the business operator.
(27) The information distribution system according to (25), in which the selection unit selects, as the distribution target, a prospective customer or a mobile body which sends the prospective customer, with which a budget that can be used for an offer can be secured.
(28) The information distribution system according to (25), in which the distribution unit distributes at least one of advertising information for a mobile communication terminal possessed by a prospective customer, advertising information displayed on an outside of a housing of a mobile body which sends the prospective customer, and advertising information displayed at a place where a passenger of the mobile body can see.
(29) The information distribution system according to (25), in which the filter processing unit filters the advertising information on the basis of a condition set by an operating company of a mobile body, which sends a prospective customer to the business operator, or by a manipulator of the traveling means, and
   the display unit displays the advertising information on an outside of a housing of the mobile body.
(30) The information distribution system according to (25), further including a recognition unit which recognizes a passenger of a mobile body,
   in which the filter processing unit filters the advertising information on the basis of a condition set according to a recognition result by the recognition unit, and
   the display unit displays the advertising information at a place where the passenger can see in a housing of the mobile body.
(31) The information distribution system according to (25), further including an input unit with which a user, who sees the display unit, performs an input,
   in which the filter processing unit filters the advertising information on the basis of a condition designated via the input unit.

### REFERENCE SIGNS LIST

- 10: Information communication system
- 11: Advertisement distribution system
- 12: Store
- 13: Store database
- 14: Dispatch system
- 15: Taxi
- 16: Information terminal

## Claims

1. An information distribution apparatus, comprising:
a selection unit which selects a distribution target of advertising information regarding a predetermined business operator on the basis of a traveling time or a traveling cost to the business operator; and
a distribution unit which distributes the advertising information to the distribution target selected.

2. The information distribution apparatus according to claim 1, wherein the selection unit selects the distribution target on the basis of the traveling time or the traveling cost predicted to be required when the distribution target travels to the business operator.

3. The information distribution apparatus according to claim 1, wherein the distribution target is a vehicle or a mobile communication terminal, and
the selection unit selects the distribution target on the basis of positional information of the vehicle or the mobile communication terminal.

4. The information distribution apparatus according to claim 1, wherein the distribution target is a vehicle or a mobile communication terminal, and
the selection unit selects the distribution target on the basis of a traffic situation of a road.

5. The information distribution apparatus according to claim 1, wherein the business operator is a seat provider who provides a predetermined service to a client having visited a seat, and
the selection unit selects the distribution target on the basis of a traveling time and a traveling cost to the seat.

6. The information distribution apparatus according to claim 5, wherein the selection unit selects the distribution target on the basis of a travelable range by a predicted time when guidance of the client becomes unnecessary for the business operator.

7. The information distribution apparatus according to claim 1, wherein the selection unit selects the distribution target on the basis of a budget of the business operator.

8. The information distribution apparatus according to claim 5, wherein the selection unit selects the distribution target on the basis of a budget that transitions according to a time to a predicted time in a travelable range by the predicted time when an empty seat is occupied at the seat provider.

9. The information distribution apparatus according to claim 1, wherein the distribution unit distributes the advertising information including a message to a client from the business operator and changes the advertising information according to the traveling time.

10. The information distribution apparatus according to claim 1, wherein the distribution unit distributes the advertising information according to the traveling cost or a mobile body.

11. The information distribution apparatus according to claim 1, wherein the distribution unit distributes at least one of advertising information for a mobile communication terminal possessed by a prospective customer of the business operator, advertising information to be displayed on an outside of a housing of a mobile body, and advertising information displayed so as to be viewable by a passenger of the mobile body.

12. The information distribution apparatus according to claim 1, wherein the distribution unit stops distributing the advertising information in response to receiving a notification that a customer has been sent to the business operator.

13. The information distribution apparatus according to claim 1, further comprising a recording unit which records a history of sending a prospective customer to the business operator.

14. An information distribution method, comprising:
a selection step of selecting a distribution target of advertising information regarding a predetermined business operator on the basis of a traveling time and a traveling cost to the business operator; and
a distribution step of distributing the advertising information to the distribution target selected.

15. An information display apparatus, comprising:
a receiving unit which receives the advertising information distributed from the information distribution apparatus according to claim 1;
a filter processing unit which filters the advertising information received, on the basis of a condition set by an operating company of the mobile body, which sends a prospective customer to the business operator, or by a manipulator of the mobile body; and
a display unit which displays, on an outside of a housing of the mobile body, the advertising information filtered.

16. An information display apparatus, comprising:
a receiving unit which receives the advertising information distributed from the information distribution apparatus according to claim 1;
a recognition unit which recognizes a passenger of a mobile body;
a filter processing unit which filters the advertising information received, on the basis of a condition set according to a recognition result by the recognition unit; and
a display unit which displays, at a place where the passenger can see in a housing of the mobile body, the advertising information filtered.

17. An information display apparatus, comprising:
a receiving unit which receives the advertising information distributed from the information distribution apparatus according to claim 1;
an input unit with which a user performs an input;
a filter processing unit which filters the advertising information received, on the basis of a condition designated via the input unit; and
a display unit which displays the advertising information filtered.

18. The information display apparatus according to any one of claims 15 to 17, wherein the display unit displays the advertising information including a message to a client from the business operator,
the information display apparatus further comprises a customer sending processing unit which sends a prospective customer, who has received the message, to the seat.

19. The information display apparatus according to claim 18, further comprising a recording unit which records a history of sending the prospective customer, who has received the messages, to the seat.

20. An information display method, comprising:
a receiving step of receiving the advertising information distributed from the information distribution apparatus according to claim 1;
a filter processing step of filtering the advertising information received, on the basis of a condition set by an operating company of a mobile body, which sends a prospective customer to the business operator, or by a manipulator of the mobile body; and
a display step of displaying, on an outside of a housing of the mobile body, the advertising information filtered.
